(19) **Europäisches Patentamt**
**European Patent Office**
**Office européen des brevets**

(11) **EP 2 440 361 B1**

(12) **EUROPEAN PATENT SPECIFICATION**

(45) Date of publication and mention
of the grant of the patent:
**09.01.2019 Bulletin 2019/02**

(51) Int Cl.:
*B23K 9/095* (2006.01)     *B23K 9/10* (2006.01)
*B23K 26/70* (2014.01)     *B23K 9/32* (2006.01)
*G05B 19/409* (2006.01)     *G09B 5/06* (2006.01)

(21) Application number: **10785806.0**

(22) Date of filing: **11.06.2010**

(86) International application number:
**PCT/FI2010/050487**

(87) International publication number:
**WO 2010/142858 (16.12.2010 Gazette 2010/50)**

(54) **WELDING OPTIMISATION**

SCHWEISSOPTIMIERUNG

OPTIMISATION DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **12.06.2009 FI 20095666**

(43) Date of publication of application:
**18.04.2012 Bulletin 2012/16**

(73) Proprietor: **Kemppi Oy**
**15800 Lahti (FI)**

(72) Inventors:
• **VALOLA, Jonne**
**FI-15800 Lahti (FI)**

• **SAARIVIRTA, Hannu**
**FI-15860 Hollola (FI)**
• **KUMPULAINEN, Jani**
**FI-16500 Herrala (FI)**

(74) Representative: **Boco IP Oy Ab**
**Itämerenkatu 5**
**00180 Helsinki (FI)**

(56) References cited:
**EP-A2- 0 615 808     WO-A1-2007/134373
US-A1- 2004 232 128     US-A1- 2007 262 065
US-A1- 2009 071 949     US-B1- 6 479 793
US-B1- 6 479 793**

EP 2 440 361 B1

## Description

## Background of the Invention

The present invention refers in general to the technique of welding, but, more specifically, to welding with electricity and, still more particularly, the object of the invention is a **module** according to the pre-amble part of the independent claim concerning a module for controlling a welding device. The invention further refers to a **welding method**, such as is cited in the pre-amble part of the independent claim concerning the welding method. The invention further refers to a **method of guiding a welder**, such as is cited in the pre-amble part of the independent claim concerning the method of guiding a welder. The invention further refers to a **welding system**, such as is cited in the pre-amble part of the independent claim concerning the welding system. The invention further refers to a **welding device**, such as is cited in the pre-amble part of the independent claim concerning the welding device. The invention further refers to a **program product**, such as is cited in the pre-amble part of the independent claim concerning the program product.

In a welding event utilizing the MIG/MAG technique according to a version known per se, an electric arc is generated, by means of an electric current supplied by a source of current, between a wire electrode being fed through a welding gun and a work-piece. The electric arc melts together the material to be welded and the wire electrode forming a molten weld pool. A wire feeding device continually feeds the wire electrode through the welding gun during welding. A shielding gas simultaneously flows through the welding gun onto the weld.

A MIG/MAG welding apparatus of a technique known per se, typically comprises a source of current, a wire feeding device, an earth cable, a welding gun, an optional liquid cooling device and a shielding gas cylinder or a connection to a gas distribution network. In operation at welding, the device traditionally is being controlled from a control panel integrated with the source of current. In DC welding, the parameters most typically being adjusted are, in addition to the welding current and voltage, the wire feed rate.

Thus, the welder is able to set the values for voltage and wire feed at the correct order of magnitude, but then the welder has to make necessary fine tuning of the voltage by hand, based on his experiential knowledge and know-how, in an effort, thus, to take into account the special features of the object of the job.

Alongside the basic welding process, different variations of the MIG/MAG process have been developed, wherein the creation of an optimal welded seam is promoted. As the number of parameters affecting the welding process increases, the usability of the device is reduced from the viewpoint of the common welder and, at the same time, the understanding of the actual impact of the adjustments on the welded seam and its quality obtained by means of the welding effort itself is being obscured. On the other hand, having the parameter values differ from the optimal values to be applied to a particular situation causes, at worst, serious quality faults in the welded seam. In some of the new welding methods, the welder is additionally supposed to adopt a technique of performance in manual welding that differ from the one he is accustomed to, which sometimes easily causes quality faults, particularly for an inexperienced welder, even though a welding machine according to prior art would have been optimally adjusted. Choosing the correct parameters in each situation requires, even of an experienced welder, testing and a search for the correct values, which in itself causes a decrease in productivity and an increase in the consumption of material.

Other welding methods are i.a. plasma arc welding, submerged arc welding and laser welding. Fusion cutting methods, such as plasma cutting, are also welding processes, in which, instead of material being added, material is being either totally removed onto another piece, or the form of the piece being the object of the welding event and/or its undividedness is altered by means of removal or other displacement of material.

US 2009/071949 A1, representing the most relevant state of the art, describes a welding power supply which includes a user interface that allows the operator to adjust one or more welding parameters comprising a welding sequence for a welding process. The user interface may include a display, which may be a graphical display depicting the welding sequence and the one or more welding parameters. The user interface may further dynamically depict a pictograph, icon or other graphical image showing how changes to the one or more welding parameters will affect the welding process, which in an exemplary manner may be the welding bead profile and/or the welding arc profile.

US 6479793 B1 describes a method of controlling a welding unit and a current source, in which various welding parameters, such as a welding current, a welding wire diameter, a welding method etc., for example, can be set by a user from an input and/or output device. The welding unit and the current source are then activated by the control device in accordance with the predetermined welding parameters, different desired values being stored in a memory device for the different welding parameters.

WO 2007/134373 A1 describes a method, and associated system and computer program product, of providing user assistance for a software application, the method including an index of topics being displayed related to the software application.

## Brief Description of Embodiments of the Present Invention

Efficient, in a way optimal, use of a welding apparatus implies the essential parameters being adjusted to their optimal values in a work-piece-specific manner.

Thus, by means of generic welding methods according to a technique known per se, one may end up too far from the optimum regarding the usability of the welding device as well as the end result. Thus, the risk of quality faults is increased, possibly even with experienced professional welders, when, as a result of the usability problems, quality problems arise.

Hence, one of the objectives of the present invention is to solve the problems in the prior art, or at least to alleviate their disadvantages. Thus, one objective of the invention is to disclose how to achieve an optimal welding quality by guiding the welder in a welding event-specific manner, according to the welding job, utilizing a graphic user interface and comparable ways of presentation. This objective
is achieved by means of the technique for optimizing welding according to the invention.

The module for controlling a welding device, according to the invention, is defined in claim 1.

The welding method according to the invention is defined in claim 9.

The program product according to the invention is defined in claim 15.

Examples of other preferable embodiments of the invention are defined in the dependent claims.

The module, according to an embodiment of the invention, for controlling a welding device is characterized in, that in order to control the operating point of the welding device graphically, by means of such a set of graphs, which comprises at least one graphic curve constructed from the relation between an x-variable and a y-variable, to be displayed on a screen as a synergistic characteristic curve specific to a selected welding event, the module contains at least one set-value adjuster for setting of an operating point for presenting, in connection with said set of graphs, said operating point and its deviation from said synergistic characteristic curve.

In the module according to an embodiment of the invention, said set-value adjuster in the module comprises at least one of the following: a set-value adjuster for a lower limit, a set-value adjuster for an upper limit, a set-value adjuster for the operating point, a set-value adjuster for an alarm limit, and a set-value adjuster for the deviation.

In the module according to an embodiment of the invention, there is a hardware module part comprising at least one of the following: a display, a touch pad, a touch screen, a display adapter, means for setting the settings for the welding device of the values of the operating point according to the set-value adjuster, a control knob, a switch, a set of keys, a set of virtual keys, sensor means for determining points of the characteristic curve (x,y) between the x-variable and the y-variable.

In the module according to an embodiment of the invention, there is a software module part comprising at least one of the following: means for display control, means for reading the touch pad, means for controlling and reading the touch screen, means for reading the values of the operating point according to the set-value adjuster and for converting them to signals to be used for setting the settings for the welding device, means for reading the information of the sensor means and means for determining the characteristic curve between the x-variable and the y-variable, database means for storing/reading the characteristic curve, the setting and/or the deviation of the operating point, according to the welding event, Monte Carlo means for storing the welding event-specific variable values of the welding variables and for analysis of their interdependency, means for reading the adjustment of the control knob, means for reading the states of the switch, the set of keys and/or the set of virtual keys.

In the module according to an embodiment of the invention, the x-variable is one of the following: the wire feed rate, the welding current, the welding voltage, the feed rate of some other welding material, the partial pressure of the shielding gas of the welding event, the air humidity, the surface humidity of the piece to be welded, a derived quantity based on one of those mentioned above, or a combination of the ones mentioned above.

In the module according to an embodiment of the invention, said y-variable for said welding event is one of the following: the voltage or some thereof derived quantity, the welding current, the welding voltage, the welding power, the feed rate of the welding material, the partial pressure of the shielding gas of the welding event, the air humidity, the surface humidity of the piece to be welded, a derived quantity based on one of those mentioned above or a combination of the ones mentioned above.

In the module according to an embodiment of the invention, there is a user interface for selecting for the welding event at least one of the following factors influencing the welding event: the welding geometry, the welding material, the shielding gas, the shielding gas rate, the synergy curve of the welding event.

In the module according to an embodiment of the invention, said user interface is arranged for showing a demo, according to a selected welding event, concerning a factor influencing the welding event.

In the module according to an embodiment of the invention, there are alarm means arranged to warn about a variable value exceeding/going below the optimal range associated with a welding event and/or about a safety risk.

In the module according to an embodiment of the invention, there are presentation means arranged to guide the welder with AV-guidance in accordance with the welding event, at a presentation speed selected by the welder.

In the module according to an embodiment of the invention, there are Monte Carlo means arranged in connection with database means for storing in a memory the welding event-specific (x;y)-points for a certain work place of a welder.

In the module according to an embodiment of the invention, its said Monte Carlo means are arranged to form and/or fine tune a fit according to a welding model by means of a set of (x;y)-points in order to create a synergy curve.

In the module according to an embodiment of the invention, its said Monte Carlo means are arranged to be used forming at least one deviation between the variable values measured during the welding operation and the pre-stored reference values.

In the module according to an embodiment of the invention, in its welding model, the module is arranged to use a polynomial function as the fit to be applied for producing the synergy curve by means of at least some part $(x_i, y_i)$ of the set of points (x;y) of the welding model.

The welding device according to an embodiment of the present invention is characterized in, that it contains a module according to at least one embodiment of the invention.

In the welding system according to an embodiment of the invention, there is such a set of welding devices according to an embodiment of the invention that contains at least one such a welding device, which comprises a module according to at least one embodiment of the invention for graphic control of the operating point of at least one of said set of welding devices.

In the welding system according to an embodiment of the invention, one of its modules is arranged for remote control of, and/or for reporting about, a welding device via a functional data network connection.

In the welding system according to an embodiment of the invention, the data network connection between one of its modules and a welding device is arranged to be provided via an optical link.

A method according to an embodiment of the invention for guiding a welder, by means of a module, for performing a selected welding event, wherein in the method

- a synergistic (x,y) characteristic curve based on a set of welding variables, and the operating point of said welding event, are returned to a display screen controlled by the module, wherein said set of welding variables, as attributes, contains at least one of the following: the feeding of welding material, the welding current, the welding voltage, the welding power, the pulse shape, the shielding gas, the wire material, the wire dimension, the plate thickness, the shape of the joint, and the welding position,

wherein the method is characterized in, that the method comprises steps, in which

- an (x,y) characteristic curve and/or an operating point is being recommended for use in the welding process on the basis of a set, or part of a set, of attributes,
- the values of the welding variables according to the attributes of the welding event are obtained from a data base in order to set the operating point according to the welding event and to use the welding device in a predefined manner,
- the user is graphically guided about the effects of the parameters,
- the user accepts the values of the welding variables and/or the other attributes in the operating point, or, alternatively, adjusts some value of a welding variable and/or attribute in order to achieve the desired operating point before starting the welding,
- the welding equipment is prepared to perform the welding job according to the accepted parameters.

In a method for guiding the welder, according to an embodiment of the invention, there is a step, in which a way of performing the welding job is being recommended in response to the user having selected to request a recommendation.

In a method according to an embodiment of the invention, in the graphical guidance step, the deviations between the values measured during the performance of the welding job and the pre-stored reference values are being presented.

In a method according to an embodiment of the invention, the measured values are the current, the voltage, the power, the frequency of shorts, the number of shorts per unit of time and/or the duration of the shorts.

In a method according to an embodiment of the invention, on the basis of deviations, corrective actions are being recommended to the welder.

In a method according to an embodiment of the invention, there is a step of graphical guidance for presenting to the welder actions following the welding event.

In a method according to an embodiment of the invention, there is a step of graphical guidance for presenting to the welder the welding event before the welding, after the welding, and/or during the welding event.

The program product according to an embodiment of the invention is arranged on a medium in machine-readable form to be executed in a microprocessor for installing the elements of the software module part and/or to be used in order to provide the functionality of the welding module.

The program product according to an embodiment of the invention is arranged on a medium in machine-readable form to be executed in a microprocessor in order to guide the welder and/or implement the welding method.

Then, the deviation of the operating point from the synergy curve can be viewed as an informative illustration (e.g. by means of a setting ball visualized by the set-value adjuster of the user interface, which ball is arranged to move along the y-axis as the fine tuning is being performed for the y-variable used in welding). Then, the value, according to the deviation, for the y-variable is the actual desired value for such an operating point at which one intends to perform the welding, with settings according to the attribute values of the welding variables. Correspondingly, the procedure can be the same for the x-variable, by means of a set-value adjuster visualizing its fine tunings.

Then, a welding event-specific fine tuning can be implemented, when, possibly, a plain synergistic adjustment would not produce quite the desired end result through, e.g., voltage control, when it can be adjusted, if desired, independently of the wire feed rate. According to an embodiment of the invention, the effect of the fine tuning can be visualized by depicting the length of the wire, although the effectively adjusted parameter in reality would be the voltage. One of the effects of the tuning causes a change of the length of the electric arc, and so it can be displayed utilizing an adjustment scale. Then, the user gets an impression of what values he has been using in a first welding event, whereby estimating the corresponding values in a second welding event, where some parameter differs from the corresponding one in said first welding event and which can be in accordance with said first welding event, when applicable, not being solely limited to said fact. The values of the variables can further, if desired, also be visualized by means of the position of a set-value adjuster in relation to the synergy curve on the display screen of the module controlling the welding device.

In the module according to an embodiment of the invention, there are means for producing a set of (x,y) points consisting of operating points indicated by a welding parameter according to an x-variable and a welding parameter according to the y-variable, and/or for selecting as such a synergy curve, which forms such a set of operating points in which, at each operating point, a certain dependency, by means of a welding model, is determined between the x-variable and the y-variable, to be used for adjusting the parameter expressed by the x-variable and for adjusting the parameter expressed by the y-variable based on their interdependence, whenever one of them changes such, that every changed operating point still is an operating point defined by the synergy curve. According to an embodiment of the invention, synergy curve fits for welding variables of an (x,y)-system of coordinates can be produced by means of a welding model, when at least one operating point is known. Typical welding variables are e.g. the feed rate of the welding material, e.g. a wire, (x-variable) and the welding voltage or a thereof derived quantity (y-variable). According to an embodiment of the invention, the welding model is arranged to be updated, whereby it can be refined, even for each work place.

According to an embodiment of the invention, deviation from the customary synergy curve can be made in order to make fine tuning on the basis of the type of joint, the position of the joint and/or the choice of material. Other data, to be received from the user for the (x;y)-variables concerning the welding event, are typically such welding parameters as the thickness (dimension) of a wire of additional material, the material of a wire of additional material, the composition of the shielding gas, and the material thickness of the work piece to be welded, just to mention an exemplifying few, not solely being limited to the listed ones, per se, amongst the known welding variables. The values for the welding variables to be used can be conveyed to the welding device as a set of attributes.

The sensor means may comprise at least means provided for measuring a welding variable in a welding event. The sensor means may also, when applicable, comprise e.g. a position sensor and/or a distance gauge for measuring a distance for the optimisation of a welding variable. The sensor means may, when applicable, control the welding process as such, and/or assist the welder in visualizing the effects of the parameter values of the welding variables.

One typical welding parameter, and thus, an attribute per se defining the welding event, is preferably the wire feed rate. Some other typical welding parameters are, preferably, the welding power and/or voltage, and other relevant possible quantities derived from the said ones. In selecting the settings according to the (x,y) pair of variables selected as master, according to an embodiment of the invention, the deviations caused by the type of joint and/or the position can be included in the settings of the operating point. Then, deviation from the synergy curve can be made by setting the module according to an embodiment of the invention in a mode, which enables non-synergistic adjustment. However, then, the curves according to the synergistic dependency of the values of the variables can be shown to the user in order to visualize the deviation. The presentation can be administrated by means of settings in the software module part. Then, the module may issue a recommendation, which may be either accepted by the user or the user may adjust the values according to his/her liking. Based on the rights of the welder acting as user in connection with the welding event, certain adjustments may be excluded from the rights of the user.

Below, by a welding event, generally speaking, is meant an event, in which, by means of welding with a heat effect, at least a first part of an object and a second part of an object are being attached to each other. The welding event is then a joining event. As a welding event is also regarded such an event, in which, by means of a welding device, the form and/or undividedness of a certain object is being changed by means of a heat effect, which is provided with a welding device. Such a welding event is a separating event. According to an embodiment of the invention, the welding event, as such, can be regarded as also including preparatory steps and/or events following the making of the joint, follow-up jobs. The welding event can be described by means of a set of attributes, some of which, according to an embodiment of the invention, are associated with the welding job itself. According to an embodiment of the invention, some attributes are associated with the adjustment and/or setting of welding variables, which may be settings made in advance and/or made during the welding process, and which welding variables also may be x-variables and/or y-variables. According to an embodiment of the invention, some attributes are associated with the geometry of at least one object to be welded and/or its position in relation to the field of gravity. According to an embodiment, some attributes are associated with the visualization of the welding event to the welder.

Then, in a welding event, generally viewed, objects or parts of an object are being joined, they are being deformed and/or a piece constituting the object of the welding event is being divided by cutting by means of the heat effect of the welding into a set of pieces, which set comprises at least two pieces. Thus, the welding events can be categorized roughly into joining events and separating events and deforming events.

A person skilled in the art will realize, on the basis of the invention, that some welding events may comprise a separating event, a deforming event and/or a joining event, performed in an order in accordance with the performing of each welding event.

According to some embodiments of the invention, the joining of the objects in the welding event occurs mediated by a welded seam. The welded seam is known per se to persons skilled in the art, but reference is also made, when applicable, to joint points between the objects to be welded in a joining event of a form differing from a line, and also to cutting scars being left in pieces in connection with embodiments concerning separation of pieces in a separating event. One can influence the structure of the welded seam by means of the welding parameters. In general, it is desirable to make the welded seam as strong and durable as possible, the desirable features being e.g. tenacity, hardness, in combination with the former, uniform quality, repeatability in products containing welded seams, neat appearance, and, in some cases, inconspicuousness, and suitable combinations of the features mentioned above. The better the structure of the welded seam corresponds to the structure of the objects to be joined the better, in general, is the welded seam.

The composition of the welded seam or some part of it can be based on the composition of the objects to be joined or of the parts of it, or, in some cases, the composition may additionally contain some other material than the material in either one of the objects to be joined, provided that the objects to be joined and said other material are suitable for the joining according to the welding event, which is also well known per se. Thus, the distinction between e.g. welding and brazing remains wavering. So, according to an embodiment of the invention, also a brazing process can be optimized, when applicable.

According to an embodiment of the invention, in the method according to the embodiment of the invention, the welding power is adjusted by means of a synergistic manner of adjustment, known per se. In the synergistic adjustment, the wire feed rate and the voltage are mutually bound according to the relation given by a so called synergistic welding curve. For different materials, wire diameters of the additive material, and shielding gases, synergistic curves of their own may have been created. The power value obtained by synergistic adjustment can be fine tuned by means of another adjustment element enabling control of the voltage alone, and then one may, by means of that, within certain limits, 'deviate' from the balance between voltage and wire feeding given by the synergistic welding curve. In an embodiment of the invention, the power adjustment is visualized to the user by illustrating the synergistic power adjustment and by illustrating the adjustment element for the power adjustment, i.e. the adjustment element for the wire feed rate, as a graphical characteristic curve illustrating the synergy curve, onto which the desired operating point can be positioned, unless one wants to deviate from the synergy curve. In an embodiment of the invention, the aim is to visualize to the user the deviation from the voltage given by the synergistic curve possibly accomplished by means of a fine tuning element, by depicting the adjustment element for the synergistic power adjustment by means of a graphical characteristic curve and, at the same time, to show to the user in an illustrative manner the deviation of the voltage from the synergy curve in connection with it.

A weakness in the prior art synergistic adjustment is, that special features of the work object are not taken into account. According to an embodiment of the invention, the work object is described to the welding device in more detail than in the prior art, by questioning the user welder about the type of joint and/or position of the joint in the work object, not, as such, being limited to said attributes. The joints in the case of two objects, for example, can be described (e.g. in a rough classification each having 8 degrees of freedom, which classification and its basis per se can be presented to the welder) in the form of a basic matrix 8 x 8 of their type of joint and position of the joint, not per se limiting the number of welding events and/or the classification to the said one. Then, the synergy curves stored in a memory accessible to the welding device can be renewed for each welding task such, that, in applicable welding events, they take into account these variables as well. The synergy curves can be stored in a welding task-specific form, according to one embodiment, on the basis of welding parameters that in practice have been observed to be good ones, or, according to another embodiment, on the basis of welding tests performed in advance for each combination. Then, in creating the synergy curves, also the influence of the choice of materials on the synergy curve can be taken into account in a material-specific welding event. According to an embodiment of the invention, in composing a variant of the synergy curve, technique known per se is being utilized, on the basis of a model combining welding variables in composing a synergy curve, where, by means of the model, a relation between the x-variables and the y-variables as welding variables can be provided.

According to an embodiment of the invention, the adjustment elements influencing the welding variables of the module are welding job-specific. According to an embodiment of the invention, a synergy curve arranged in advance according to a welding task-specific welding event can be visualized to the user, the welder, in order to graphically demonstrate the effect of the variables associated with the synergy curve. The graph of the adjustment element, for example, according to an embodiment, on a certain portion of the display screen of the module, thus, is welding event-specific in accordance with the welding job. The graph of the adjustment element, like, for example, the graph of the characteristic curve of the adjustment element for adjusting the wire feed rate in synergistic adjustment is, thus, welding event-specific in accordance with the welding task and, thus, can be different for a first welding event than for a second one. Fine tuning and/or a corresponding deviation of the welding variable from the synergy curve can be visualized to the user by means of the functions of a corresponding adjustment element.

The fine tuning of the voltage, for example, can be presented on the display screen of the module as an animation illustrating the effect of the fine tuning (a change of the wire length) and the deviation from the job-specific synergy curve caused by the performed fine tuning is presented in connection with the graph of the power adjustment, whereby this informs the welder of the effect of the adjustment. Preferably, in the user interface, the same symbol is being used for the same variable.

According to an embodiment of the invention, a job instruction and a performance technique depending on the selected parameters is presented to the welder as a recommendation. Then, different parameters can be selected for the recommendation according to the type of joint and its position. Special features to be taken into account by the welder in the preparation for the welding event, during the event and/or as follow-up tasks can be associated with the welding event, according to what is being presented in any remarks and warnings related to just this work object and/or to the selected adjustment regarding the welding event and its stage. In that case, the welding event-specific instruction may show the welder an animation of, for example, a direction, differing from the customary one, of the movement of the burner, not, being limited, per se, solely to said presentation. Then, the welder can also make the choice, whether to accept the recommendation, to deviate from the synergy curve and by how much, and he can also demonstrate what the effects can be of the deviation before he performs his actual welding job.

According to an embodiment of the invention, the welding performance of the welding event can be controlled and/or guided by means of video, animation and/or an audio signal such, that virtual pictorial material is brought into the welder's field of view, which material, however, is associated with the actual welding event/a piece to be welded. Then, according to an embodiment of the invention, for example, a spot of light moving along the intended line of the welded seam can be arranged as an aid to the welder, where the speed of said spot of light along the welded seam represents the optimal speed in the welding event-specific circumstances in order to achieve an optimal performance. In that case, according to an embodiment of the invention, the distance between the spot of light created by means of, for instance, a laser dot, and a certain part of the welding arc can be measured. The welder can be warned, pictorially, by means of speech or by some other audio signal, or by a change in some feature thereof, of changes associated with the distance. To be mentioned as an example of another audio signal, there would be a certain pitch of a sound, in itself usually pleasing, to be presented to the welder, which pitch would change, according to whether the distance changes, getting sharper, for instance, as the distance decreases and lower as the distance increases, not, however, being limited, per se, solely to said examples.

As a second example could be mentioned the use of sound pulses at a certain repetition rate in order to maintain the optimal distance according to the preset value, but the rate of the sound pulses can be changed in a manner depending on the deviation in distance from the optimal distance: by, for example, increasing the pulse rate as the distance decreases or by spacing out the pulses as the distance increases, not being limited, per se, solely to said examples.

According to an embodiment of the invention, a combination according to both audio guidance and a spot of light, but, according to one embodiment, the welding event can also be presented in advance in order to demonstrate to the welder the choices associated with the welding event, and then the welder can be told about also other audio-visual (AV) aids and their functions. In that case, it is possible, by means of a module according to an embodiment of the invention, to influence the distance described above, and/or the special features of the sound. According to an embodiment of the invention, the source of light and/or the source of sound are intended to be permanently installed with appropriate tuning in order to have them focused in a welding event-specific manner for the guiding of the welder. According to an embodiment of the invention, one of the AV devices is integrated in the work equipment and/or the protecting mask of the welder. According to an embodiment of the invention, a mode is arranged in the module, in which the welder then also is able to practice performing the welding in a virtual manner without voltage and wire feeding, but otherwise in authentic conditions. In a welder guidance according to an embodiment of the invention, the so called Augmented Reality Welding (ARW) technology can be utilized, whereby virtual objects localized in the real world are being created in the welder's view for augmenting the performance of the welding job. The virtual object can be, i.a., the desired welded seam or a depiction of its rate of creation, viewed on the basis of the welding event and the attributes associated with the event. In that case, according to an embodiment of the invention, the precession of the spot of light and its speed of travel along the welded seam are being evaluated for the AV-assisted welding event.

In some embodiments of the invention concerning automation, said distance and/or audio signal in an acoustic form (and/or as an electrical signal) can be used for creating a feed-back signal to be used for controlling the welding spot's motion accomplished by the welding device as close as possible to the optimal speed of motion. At the same time, according to another embodiment, also the feeding of gas and/or the wire feed rate, but also the feeding of any other chemical or additive to the welding spot and/or the weld pool can be controlled in a welding event-specific manner.

**List of Figures**

Below, some preferable embodiments of the invention are presented in more detail referring to the accompanying figures, of which

Figure 1    illustrates a view of a module according to an embodiment of the invention,

Figure 2    illustrates, as a diagram presentation, the structure of a module according to an embodiment of the invention,

Figure 3    illustrates devices according to an embodiment of the invention,

Figure 4    illustrates the operation according to the welding event of a module according to an embodiment of the invention,

Figure 5    illustrates the influence of a module according to an embodiment of the invention in optimizing a welding event,

Figure 6    illustrates the defining, according to an embodiment of the invention, of a welding event by means of its parameters,

Figure 7    illustrates a module according to an embodiment of the invention, and

Figure 8    illustrates a view on the display of a module according to an embodiment of the invention.

The proportions shown in the figures are not necessarily in scale mutually and/or with other dimensions. The same reference numbers for the same parts are used in the different figures. About any utilization of the same reference number in another object being referred to, it is to be noted, that the objects, then, are not necessarily exactly identical, but a person skilled in the art will understand the possible differences between said objects mentioned in the presentation.

**Detailed Description of the Invention**

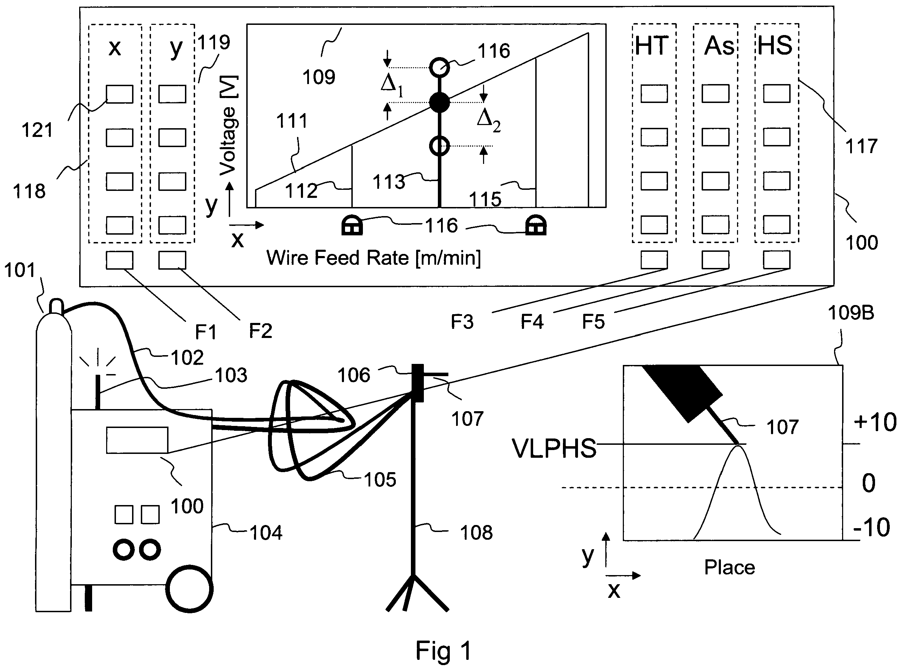

Figure 1 shows a schematic view of a module according to an embodiment of the invention and of its view by means of an example associated with a welding event. Figure 1 shows a view of the display 100 of a module according to an embodiment of the invention. Although Figure 1 shows, as an example, a display the size of all of one side of the module, the invention is not intended to be limited solely to said feature, but the display can be smaller or, in an embodiment, even larger, particularly when the display associated with the module according to the embodiment is separate from the module itself. Figure 1 shows, on a graphic display, in a portion 109 of it arranged to present a characteristic curve 111, a graphic characteristic curve 111 illustrating a synergy curve. In the figure, the characteristic curve is a straight line or essentially a straight line, but some other kind of characteristic curve can be used, if other than a linear welding model is being used in order to present the interdependency of the variables of the synergy curve on the corresponding set of operating points. The characteristic curve can also be part of a triangular graphic symbol, wherein the hypotenuse or part of it can be used to illustrate a straight synergy curve, according to one embodiment. In the invention there is no wish, per se, to be limited to just the straight line form of the synergy curve, but, rather, on the basis of what is presented in the invention, a person skilled in the art knows, that the form of the synergy curve is based on the (x,y) set of points according to the welding variables but also on the curve to be fitted/having been fitted by means of said set and the welding model, the fit, and/or its shape, independently of whether the fit, per se, is an analytical function, an approximation of it, or a fit produced by means of numerical methods.

The portion 109 of the display can also, according to an embodiment, be used for showing pictures, graphs and/or videos to the welder, according to one embodiment also as multiple screens by means of a partitioned display, whereby different views of the welding events and/or curves can be selected for the various screens.

Figure 1 shows, according to an embodiment of the invention, that to the right of the portion 109 of the display there are sets of selection push buttons 117, shown for selecting the welding event (HT, hitsaustapahtuma), for selecting the welding event-specific welding position of the pieces (As, asento) and/or for performing a special fine tuning (HS, hienosäätö) in the welding event. According to an embodiment of the invention, a few of the module's other selection elements F1, F2, F3, F4, F5 are arranged for implementing some user defined functionality. The functionality can be a welding event-specific recommendation, instruction, animation, control and/or warning. One can also influence the functionality by updating the software module part of the module, and then the updating can be optimized for a certain welding event, or for a set of welding events.

According to an embodiment of the invention, as the x-axis of the portion 109 of the graphic display of the module 100 a parameter range of a welding variable associated with a certain welding event, and then for the x-axis a certain graduation of scale can be selected for presenting a welding event-specific characteristic curve 111, by means of a selection element 121 of a set of selection elements 118 associated with the x-axis. According to an embodiment of the invention, as the y-axis of the portion 109 of the graphic display, correspondingly, a parameter range of a welding variable associated with the welding event, whereby for the y-axis a certain graduation of scale can be selected for presenting a welding event-specific characteristic curve 111, by means of a selection element of a set of selection elements 119 associated with the y-axis.

Although four push buttons of rectangular form are shown as selection elements in each set of selection elements 117, 118, 119, in the invention there is no intention to be limited just solely to the presented example regarding the form, number, or positioning of the selection elements in arranging them to be used by the welder.

According to an embodiment of the invention, the operating point and its suitable adjustments can be preset before that part of the welding event in which the actual welding is being performed. However, according to an embodiment of the invention, the display associated with the module, or the portion 109 of it, is arranged to show, in the course of the welding event, a demo according to the work step being performed at the time, or, anticipatorily, a certain work step of the welding event.

There is no desire in any way to limit the number, form, or position of the selection elements 121 in a certain set of selection elements to just the presented examples. According to an embodiment of the invention, the form of the selection push buttons can be round or some other form optimized regarding the usability for operation by the welder wearing gloves. Although, in the example of Figure 1, the display is thought to be a touch screen, there is no desire, in the invention, to be limited solely to the presented example, but rather, the push buttons and the display can be separate, when applicable. According to an embodiment of the invention, electromechanical roller devices or other knobs, sliders or a combination of the above, known per se, can be used in order to achieve the functionality of the selection elements illustrated by means of the example. According to an embodiment of the invention, the module comprises both mechanical and touch screen based selection elements.

Figure 1 shows an example of such a characteristic curve, on the x-axis of which there is the wire feed rate expressed using a unit of measurement for the welding parameter suitable for the welding event, and on the y-axis of which there is the welding voltage associated with the welding event.

According to an embodiment of the invention, the values of both the y-axis and the x-axis are presented, together with the values of the respective welding parameter corresponding to the operating point on the display of the module and/or on some other display belonging to the welding system.

According to an embodiment of the invention, the touch screen of the module 100 is arranged such, that the characteristic curve 111 and/or its shape can be adjusted by dragging it on the screen. The function can be utilized, for instance, in finding the optimal operating point in order to preset the values for a certain welding event. The embodiment can also be advantageous, when the welded seam itself, in special welding, differs from the customary, when it is desirable to adjust/set welding parameters for an exceptional job. According to an embodiment of the invention, the characteristic curve can be stored in a memory and/or be locked to a certain welding event. The locking and adjusting elements 111, 113, 116 are arranged, for example, such, that they illustrate the limits 116, moving within which the welding event still can be performed in a certain manner. Although the locking elements 116 are depicted on the x-axis, based on the invention it is evident, that, through the characteristic curve 111, these x-points also correspond to some points on the y-axis, i.e. the voltages, in the example in the figure. According to an embodiment of the invention, the pointer 113 is arranged to move on a certain portion of the characteristic curve, for example in the range indicated on the x-axis by the locking and adjusting elements 116.

The corresponding adjustment limits are illustrated by means of open circles, shown at distances in the y-axis direction $\Delta_1$ and $\Delta_2$ from a fully blackened circle, which, in the example of Figure 1, illustrates the operating point for the welding event on such a synergy curve that shows the relation between the voltage and the wire feed rate. The locking and adjustment elements 116 can be arranged such, that the locking and/or its release can be made, for instance, by means of a function key or some other selection element or a combination of those. The circular adjustment element and the adjustment element according to the vertical line can be locked to each other, according to an embodiment of the invention, or their mutual locking can be released. In the locking, such an alternative can also be selected, that the circle moves along either some synergy curve to be displayed or on some other subset of operating points being part of a set of operating points.

According to an embodiment of the invention, the display of the module is arranged such, that many different characteristic curves can be displayed simultaneously as views similar to the screen portion 109. When applicable, the characteristic curves can be located in the same screen portion or drawn on different coordinate systems. Then it will be easier for the welder to assess the effect of a parameter that was selected by the welder to be adjusted, on other parameters associated with the welding event. The welder may desire, for example, to view the average power and voltage corresponding to the pulsation of the voltage and/or current associated with a certain welding event. According to an embodiment of the invention, then, as another view, the fine tuning of the voltage can be selected (or some quantity derived from the voltage), which is presented as a change of the length of the free wire/electric arc (VLPHS) depending on the adjusted voltage. Then, by means of adjustments according to the set-value adjusters, the effect of each adjustment on the free wire length can be illustrated, but also, at the same time, for example on the temperature of the electric arc. According to an embodiment of the invention, the module is arranged to display, on one portion of the screen, an estimate, according to a model, of the temperature of the electric arc and/or other welding variables in the welding event. The deviation from the synergy curve of the voltage fine tuning is illustrated to the welder by means of the black ball in Figure 1, drawn on the characteristic curve graph 111, not, however, being limited solely to its position. When the voltage fine tuning is 0, the ball is located on the characteristic curve. Correspondingly, as the voltage is being decreased or increased, the black ball will move in the y-axis direction. When the module is switched to synergistic mode, the black ball will move along the synergistic characteristic curve 111, but when the module is not switched to synergistic mode, the ball will move freely in the y-direction, therewith illustrating the tuning. Then, the operating point of the welding machine will deviate, as far as the voltage is concerned, from the guidance value of the synergy curve in a desired manner. Following the fine tuning, the synergistic adjustment of the wire feed rate, performed if necessary, will move the pointer 113 in the direction of the x-axis and, correspondingly, the black ball in the direction of the characteristic curve 111. However, in one embodiment, depending on what adjustment elements are mutually locked. In an embodiment of the invention, the adjustment of the wire feed rate can be deviated, correspondingly, from the synergistic adjustment, and the deviation can be shown on the characteristic curve as a motion of the black ball in the direction of the x-axis, either along the synergy curve, or towards it, depending on the locking settings.

Figure 1 also clearly shows the welding gun 106, in connection with which a coated electrode is depicted with the reference number 107 in a welding event (TIG event), but also a welding wire, which can be fed by means of a welding wire feeding device 107 (not separately shown in the figure) in another welding event (a MIG event, a MAG event). The object of the line according to reference number 105 is to illustrate the feeding of electric power and/or the wire feed, and the object of the line according to reference number 102 is to illustrate the feeding of welding gas from a gas store 101 in an appropriate welding event, each of them with pre-set means and choices associated with it, however, not being limited solely to the presented assembly or some part of it.

Figure 1 shows that the module 100 according to an embodiment of the invention is associated with a welding device 104. Then, the module 100 can, according to an embodiment, be permanently installed in the device 104, but, according to another embodiment, it can be removed by means of a snap attachment without further disassembly of the device 104 and/or the module 100. According to an embodiment of the invention, the device 104 is arranged in Figure 1 such, that, according to an embodiment, it comprises I/O means 103 for communicating external information and/or settings between the welding device 104 and some other part of the welding system, or for arranging remote control. The I/O means 103 may comprise sender means for reporting welding event-specific settings, receiver means for receiving settings and control, or transceiver means for two-way communication of information concerning the welding, through a data communication network, between the device 104 and a part of the welding system controlling it. By the manner of drawing, the aim is to give an example of I/O means applicable for use in wireless communication according to an embodiment of the invention. The I/O means can also be, for instance, optical, acoustical, but also wired. In the example of Figure 1, the I/O means 103 are arranged to operate in the radio frequency domain, when applicable, for communicating data associated with the welding event to the welding device 104 and through it to the attention of the welder using it. The reference number 108 illustrates an example of a supplementary support for the welding gun, not being limited solely to the presented mechanical structure, position in the structure and/or form, per se. According to an embodiment of the invention, the support can also be a part of the welding system, arranged to be used for attaching and/or aiming the AV means according to a welding event, for welder guidance.

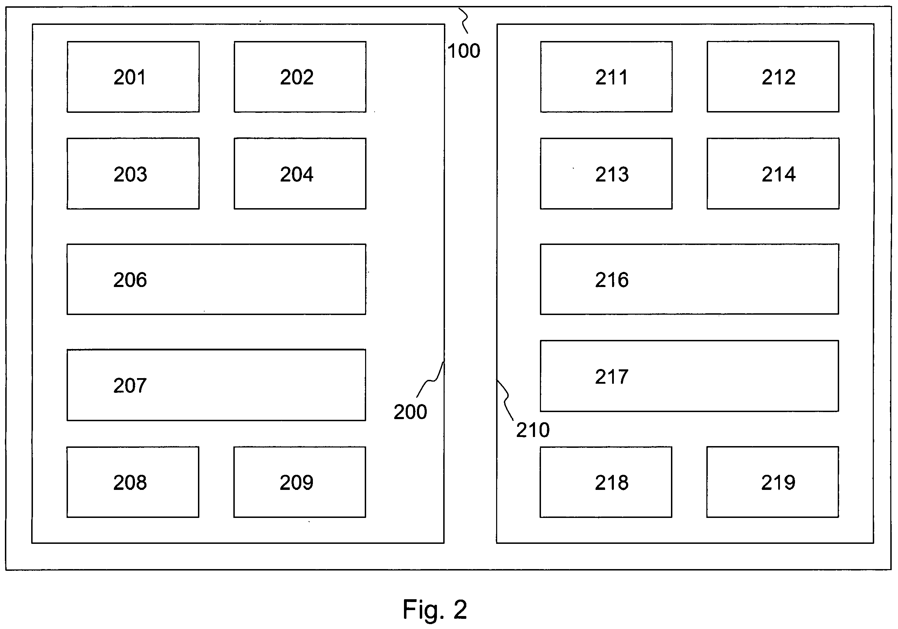

Figure 2 illustrates schematically a module 100 according to an embodiment of the invention. The figure disregards, as such, the mechanical structure and/or positions of the selection elements or the screen or other parts in the structures of the module. Neither does the figure include the infra-structure needed for supporting the functions of the parts shown in the figure, which infra-structure may comprise, when applicable, parts and/or means and arrangements known per se. According to the example of Figure 2, the module 100, according to an embodiment of the invention, for optimisation of the welding in a welding event comprises, as arranged, a hardware module part 200 and a software module part 210. The hardware module part may contain, when applicable, mechanical parts, switches, relays, electronics and other physical device elements of the module for providing the functionality and/or usability of the module.

The module according to an embodiment of the invention, however, includes at least one of the following: a microprocessor 201, a non-volatile memory 202, some other memory 203, a display control 204, an I/O adapter 206 for communicating low power signals with a device attached to the module 100 (e.g. an environment sensor or some other sensor), an I/O adapter 207 for communicating control of high power signals with the module 100, a control unit 209 for controlling, for example, the wire feed or the feeding of gas, but, according to an embodiment of the invention, one of the control units 209 can be arranged to serve as a control unit for a user port. Then, the module can be programmed to utilize a signal defined by the user, either as an incoming signal and/or as an outgoing signal. Then, feedback and/or other control/sensor signals associated with automation of certain work steps, for example, can be combined with the functionality of the module and, that way, be utilized in optimizing the welding event. According to an embodiment, the I/O adapter 206 and 207 is integrated into one, whereby, by coding the signals, their addressing can be distinguished according to the control objective. Then, by means of a digital signal, for example, multi-device control can be provided, even in different objects of the welding system, but, in addition, robustness against interference is achieved, which is suitable for an industrial environment.

According to an embodiment of the invention, the module 100 contains a software module part 210 comprising a set of program means for supporting/providing functionality for the hardware module part 200. Then, the software module part of the module according to an embodiment of the invention includes at least one of the following: display control means 214, touch pad reading means 211, touch screen control means 214 and reading means 211, means 211 for reading the values of the operating point according to a set-value adjuster and for converting the values into a signal to be used for setting 213 the settings at the welding device, means 216 for reading data from the sensor means and means 217 for determining the characteristic curve between the x-variable and the y-variable, database means 212 for storing /reading in the memory the characteristic curve according to the welding event, the operating point setting and/or the deviation, and means 219 for performing updating via a port of the hardware module part and/or the I/O interface. One of the means 219 may also be arranged to set the settings of the module and/or change its data also in other circumstances than in connection with updating. This is illustrated by means of the manner of drawing in Figure 2, in which two instances of the means 219 are presented. The data base means can also be used, when applicable, in browsing, storing, and/or changing demos or other data associated with the usability of the welding device, but also for storing the updates. The software module part can also be used, when applicable, for handling the values of the welding variables and for determining and/or storing the fits according to the welding model.

The means or the number of means presented in the software module part and/or the hardware module part are not intended to be limited solely to the examples shown.

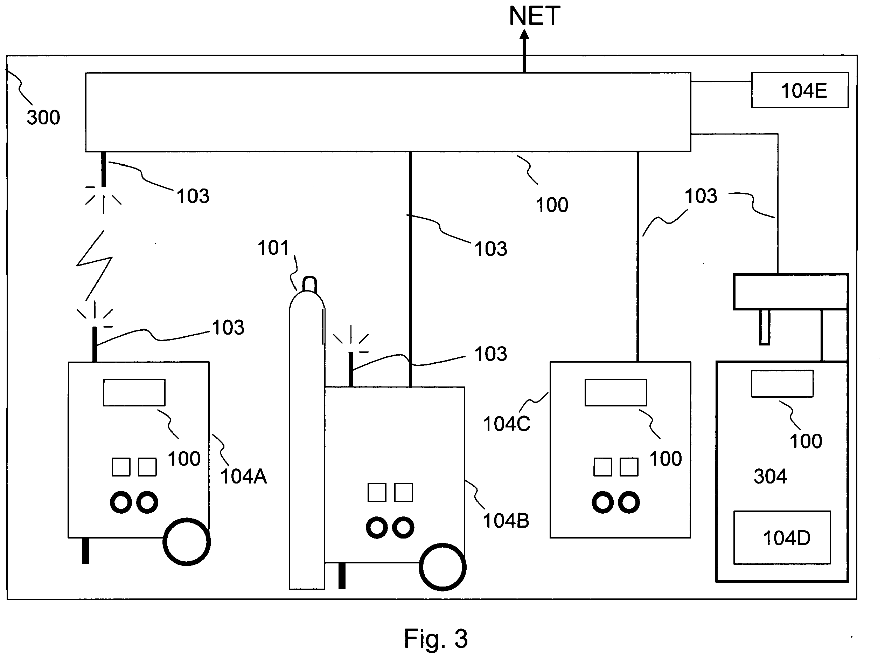

Figure 3 illustrates, as an example, a welding system 300 according to an embodiment of the invention. It shows that a module 100 according to an embodiment of the invention is arranged to control such a set of welding devices, in which set there is at least one welding device containing a module according to an embodiment of the invention. The welding devices according to an embodiment of the invention are referenced by means of reference numbers with a numeric portion of 104, and which is followed by a letter A, B, C, D, or E, in order to refer to a certain feature of the welding device. By the number 104 the intention is also to refer to the welding device in Figure 1, not, however, being limited, per se, just to the plain example according to that figure. By the manner of drawing the Figure 3, there is also a desire to express, that the module 100, according to an embodiment of the invention, is suitable for a multitude of different welding events in order to control the functions of an associated welding device according to a set operating point, such as, by means of the welding event-specific synergy curve and the settings for the operating point, it can be illustrated to the welder.

One module 100 of the welding system (at the top edge of the figure) is arranged for wireless communication through functional I/O means 103, according to an embodiment of the invention, either two-way or one-way with a welding device 104A, depending, in an embodiment-specific manner, on whether the welding device's information about the operating point is stored before the welding procedure, during it, and on where the storing takes place, in the device itself and/or in an external part controlling the device. Said welding device can, as such, also include a second module 100 according to an embodiment of the invention, but the example in the figure, by means of a lightning symbol, illustrates that the device is being actively controlled by just that module 100 according to an embodiment of the invention, wherein the module also is provided with a subscriber connection (NET) to a data network for communicating, via the network, welding event-specific information and/or settings. No gas cylinder 101 for enabling the use of shielding gas has been drawn in association with the device 104A, although, as such, shielding gas can be used. Thus, according to an embodiment of the invention, the device 104A can use a permanent source of gas in those welding events that require shielding gas, or, in applicable welding events that do not require gas, leave it unused.

The welding device 104B according to an embodiment of the invention, is shown, in Figure 3, to be controlled by means of an external module 100 according to an embodiment of the invention. In order to illustrate the control as being functional, the welding device 104B was drawn to be in wireless connection, but by means of the connecting line between the module 100 and the device 104B, such embodiments are being illustrated, wherein the welding device control is arranged to occur by wire, when applicable, per se, or in parallel with wireless control, when applicable. According to an embodiment of the invention, the welding device 304 is a spot welding device.

The welding device 104C according to an embodiment of the invention, was pictured having no wheels and no support strut, thus illustrating that a device according to an embodiment of the invention is not necessarily mobile, per se, but rather, in some circumstances, it can be used permanently installed in a work place. The device 104C is drawn without wireless control of the module 100, but control/communication can operate by wire 103, conveyed by an external module 100, or, when applicable, by means of the module of its own, located in the device 104C.

The welding device 104E is a welding device according to a technique known per se, which has been connected as part of the system according to an embodiment of the invention, but which also is connected to be controlled by a module 100 according to an embodiment of the invention through a functional connection. The data net connection NET can, when applicable, be provided by means of an optical link, a radio link, or a wired link. Then, the data transmission protocol can be a protocol, known per se, which is suitable for communication between some much used I/O means, known per se, for the control, updating and/or change of settings of functions of the module 100 according to an embodiment of the invention.

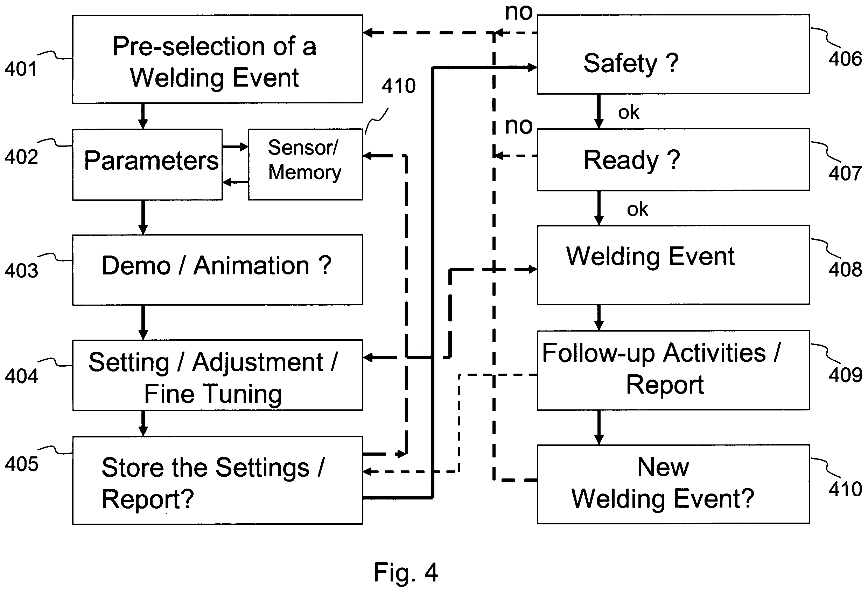

Figure 4 illustrates the operation of a module according to an embodiment of the invention, not, however, being limited solely to the presented example and/or the sequence stated therein. At the same time, it illustrates a welding method to be performed for implementing a welding event, associated with which method there is power adjustment, according to an embodiment of the invention, in accordance with a preset value as presented regarding the feeding of current and voltage, or some variable derived from either one of them, in the illustration of the welding process during the welding job, but also guidance to the user, the welder, by means of the associated method.

In order to adjust the welding power, at first, the welding event is selected 401, when the welding device has been connected to the power outlet or other suitable power source, and at least the welding module 100 has been started up. In the pre-selection, the type of welding event is selected. According to an embodiment, the welding events can be arranged to be selected based on a hierarchical classification, starting with whether a joining event or a separating event is in question. The classification can continue, when applicable, also to a MIG/MAG/TIG event including their hierarchical details. According to an embodiment of the invention, the classification of the welding event is arranged in vector form, whereby its components as attributes express details of the welding event. According to an embodiment of the invention, the vector is illustrated to the welder, whereby he, by means of selections and parameters, out of the available parts can compose a control vector, which is read by a control unit of the software module part of the module 100 and interpreted into details of the welding event. Then, sending the vector, e.g. through the data network, is fast. Then also, a welding device-specific field for identifying a certain welding device/module can be allocated either in the vector, or device-specific vectors can be used for controlling their functions. According to an embodiment of the invention, the module can be arranged to suggest a certain vector, e.g. based on previous history information, the parameter values and other attributes of which are found in a data base available to the module.

In a method according to an embodiment of the invention, the welder or some other user selects 402 the parameters associated with the welding event. These can be input through the user interface of the module 100, or be fetched 410 from the module's memory or, when applicable, from some other database in some part of the welding system. According to an embodiment, also a sensor can be used, e.g. for determining the position in the field of gravity of the pieces to be welded.

According to an embodiment of the invention, guidance is presented 403 to the user/welder in the form of pictures, sound, by means of video and/or animation, on a portion 109 of the display screen of the module 100. According to an embodiment of the invention, the demo can continue, when applicable, also during the welding itself as it is being performed, particularly when the welding event is critical regarding the speed of motion of the electric arc.

In a method according to an embodiment of the invention, the user/welder can inspect 404 the settings associated with the recommendation given by the module concerning the welding event, and, before the actual welding, make any possibly required corrections and fine tunings through the user interface of the module 100. According to an embodiment variant of the invention, the user/welder, if he so wishes, can also, via the user port of the module, program/select a control signal to be sent for the control of an external device. After the settings have been made and the operating point and its fine tuning have been selected specifically for each welding event, including possible corrections caused by the positions of the pieces to be welded, according to a method according to an embodiment of the invention, the user can, if he so wishes, store the settings in a database and/or the memory of the welding device or the module. According to an embodiment of the invention, the module is arranged such, that it measures the values of an x-variable and a y-variable in order to report the correlation between said variables concerning the welding event, to be stored in the module's memory and/or to be sent to the welding system or, via its data network connection, to a control center. Then, the variable values of the vector components can be stored in a welding event-specific way, e.g. for modeling the synergy between certain variables.

According to an embodiment of the invention, there is step, in which, after or during performing said settings associated with the power adjustment, the module is arranged to ask the user about safety, and/or to present a demo concerning safety issues, e.g. the necessity of protecting your eyes and/or getting protected from splashing metal. After this is done, and after checking that the welding event is in order and properly defined, according to an embodiment, information about the presentation of the safety demo is also arranged to be attached to a report to be sent after the actual welding event, the welder may start the welding, as the preparations are completed 407. If not, performing the welding event settings can start from the beginning. This applies also in the case that e.g. the safety considerations associated with the safety issues were not fulfilled.

According to an embodiment of the invention, information can also be conveyed to the module through a user port of the module about whether the welder's visor is closed or some other information associated with the operation and safety of the welder by means of a position sensor or other sensor. According to an embodiment of the invention, an RFID reader is either integrated in the module 100 or connected through a port to the same, for identifying the welder and/or the welding event. Then, the operation of welders with different qualifications can be examined, and, if necessary, either expand their rights or restrict them to certain welding events, e.g. according to the professional skill of the welder. Then, e.g. having an apprentice at reading distance from the RFID reader, the welding device might, under control of its module, refuse to set a certain welding event in operation, unless there is an experienced welder present monitoring the activity of the apprentice. Then, on the basis of the RFID identification, a prevention signal can be provided, and, according to an embodiment, also be marked in a report as one of its attributes.

According to an embodiment of the invention, the welding part 408 of the welding event is performed according to the power adjustment settings 404 and/or the operating point. According to an embodiment of the invention, the welding method includes a step, in which follow-up activities 409 are performed. The follow-up activities may comprise activities associated with cleaning the welded objects, quenching, tempering, but they can also comprise actions associated with servicing and/or operation of the welding device itself. For example, performing subsequent assessment and/or reporting at the work place of the consumption of wire or coated electrodes, shutting down the feeding of gas, reporting, or some other matter. Then, according to an embodiment, the welding device is arranged to anticipate running out of a certain material associated with the welding event, coated electrodes, wire, and/or gas, and then, by means of a report, to request fresh supply. In view of the continuity of production, the anticipation is advantageous, particularly in welding systems consisting of a multitude of identical devices having jobs according to slightly different welding event variants, whereby the consumption of material varies in a welding device-specific manner, but also in systems, where there is a set of different welding devices, some of which are arranged for a totally different welding event than some other group of the welding devices in the system.

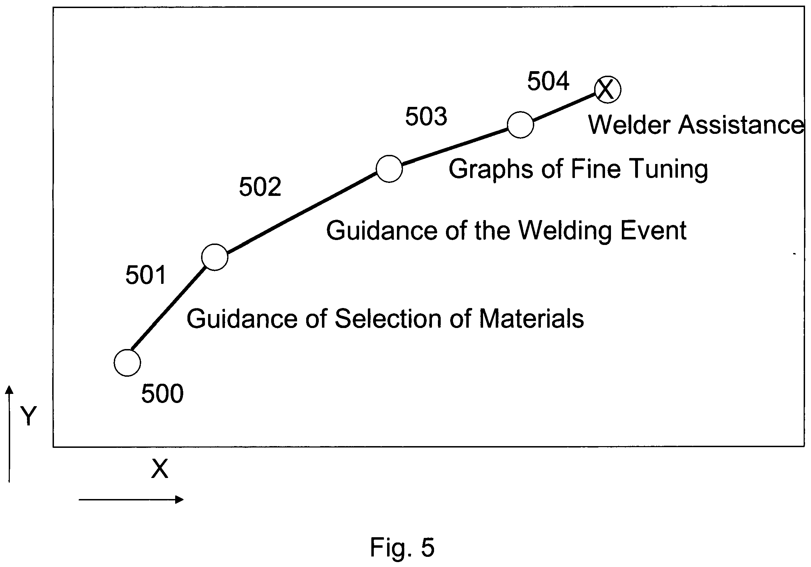

Figure 5 illustrates the effect, for optimisation of the welding event, of the parts of the guidance to be given by means of the module according to an embodiment of the invention. Figure 5 shows the relation between an x-variable and a y-variable by means of, for example, the synergy curve according to a welding model. Then, an iteration for illustrating, in the welding event, the influence of the various functions of the module 100 (not shown in Figure 5) can be illustrated by means of the transitions 501 - 504. The area 500 illustrates the performance, made by rule of thumb, of the average welder. When the module is arranged for guidance of parameter selection, one gets closer 501 to the optimal performance X. The first portion of the range 501 corresponds to synergistic tuning according to prior art. When the module, in addition, is arranged to assist the welder in order to give guidance about the prevailing conditions in the welding event concerning the particular welding event and the details influencing it, one gets closer still 502 to the optimal performance. The module is arranged to demonstrate to the welder the effect of fine tuning according to the characteristic curve graphs associated with the particular welding event, one gets even closer still 503 to the optimal performance. However, when the device is optimized regarding the performance to its optimum as far as the welding event is concerned, the activity of the welder 504 is optimized by means of, for example, the AV assistance function of the module (the embodiments associated with the spot of light traveling ahead of the welding point), whereby one is already very close to the optimal performance X.

## EXAMPLE 1

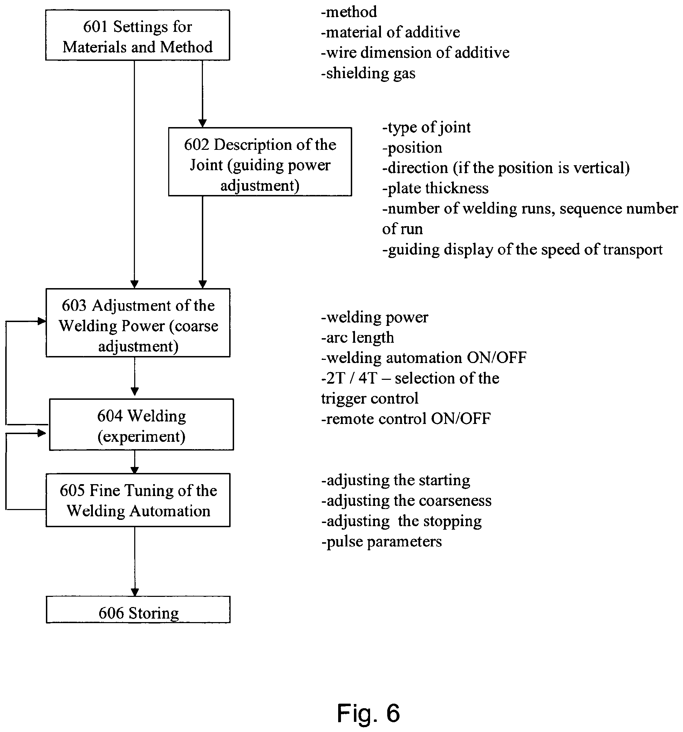

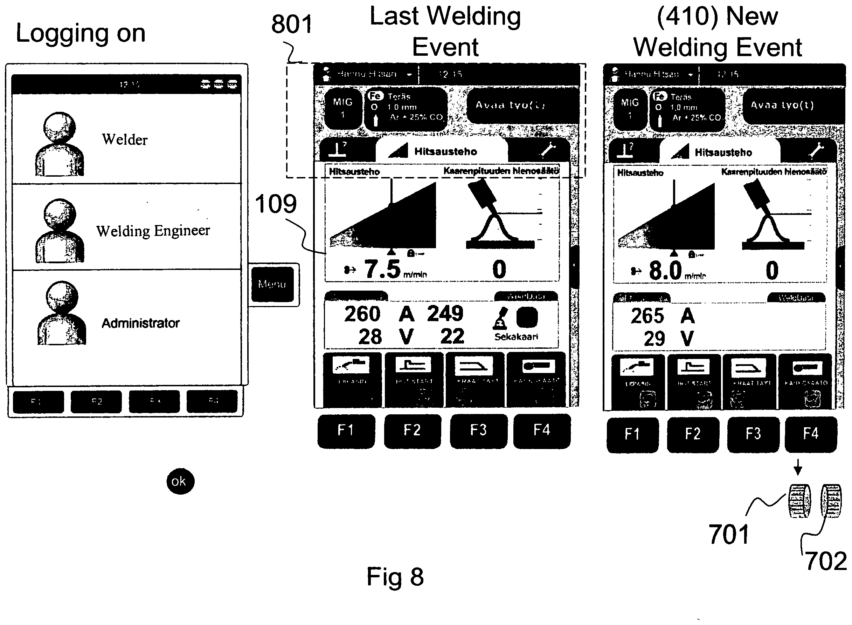

In the software module part of a module arranged according to an embodiment of the invention, there are program means arranged to implement, under their control, direct control of a welding device according to a welding event (Figure 6, Figure 8). Some of the program means are arranged into welding work software according to the classification of the welding event. Pieces of welding work software according to a classification of welding events are, for example, the MIG/MAG welding work software, the TIG welding work software, and the MMA welding work software, one for each of the main categories of welding processes.

While the welding work software is running, the welder needs immediately to recognize the most central adjustments concerning the welding and to be able to change them easily. While, in traditional operating panels, a multitude of different controls are available to the welder at all times, this constitutes the problem that it is difficult for the user to discern when, and in what context, each control should be used and how the various controls will affect each other. In the pieces of welding work software to be executed with a module according to an embodiment of the invention, the welding event is divided, with regard to the controls and functions, into groups showing adjustments of the welding device and the progress of the job related to the welding event as it occurs in reality, and by guiding the user to do things in a certain order. This is illustrated in Figure 6, which is a view, according to an embodiment of the invention, onto a display screen connected to a module 100 or of a portion 109 of the screen (Figure 1). Then, parameters, presented in the form of text, can be accessed for browsing by means of browsing means in order to perform more precise/finer scale setting of said parameters. According to an embodiment of the invention, a vector associated with the welding event can also be presented for browsing the setting values.

In a welding method according to an embodiment of the invention, a welding method suitable for the welding event is selected (601). In the selection step concerning materials and settings of the method, any additive material associated with the welding event, the thickness of the additive material, and the shielding gas will also be selected. These selections can be made automatically, in an embodiment of the invention, and be presented to the user as a recommendation, which the user, thus, can change, if required.

Specifically for a welding event, a joint 602 according to the event is selected. The module is arranged to depict the type of joint of said joint, its position, and direction, but, particularly, in the case of a vertical seam, the plate thickness, the number of welding runs, their numbering and/or order, and a guiding display of the speed of transport, either as an animation and/or by means of AV guidance. Additionally, as a kind of subtype of the type of joint, a corner joint can be selected, and then the current feed can be optimized according to the corner.

The welding power control 603 is selected for the welding event. The nominal power, in itself, to be used, the length of the electric arc, and any use of automation can be selected at that time. Also, the tuning of the trigger of the welding gun synchronization 2T/4T can be selected, as well as setting remote control on or off.

According to an embodiment of the invention, the module has an experimentation state, in which it gives the user the opportunity to test settings, whereby welding according to the desired settings can be tested, which is advantageous particularly in creating a new synergy curve or another set of setting parameters, e.g. for new kinds of objects to be welded. An adjustment vector according to settings observed to be preferable can then be stored in memory, whereby the settings of the welding event defined by the adjustment vector later can be browsed. The synergy curve according to the essential welding parameters can be created, if required, according to the welding model in use, and the values of synergistically dependent variables can be used later.

According to an embodiment of the invention, in the welding method, settings 604 associated with automation of the welding are selected. Such are, for example, adjustment of the starting, adjustment of the coarseness, adjustment of the stopping, and/or pulse parameters. According to an embodiment of the invention, advantages of both a hot arc and a cold arc are achieved by pulsing, as energy is fed in the form of pulses to the welding spot. Then, the time between pulses can be adjusted, according to an embodiment of the invention, specifically for each welding event, but also the duration of the pulses. Then, the power feed can be optimized according to the choices of material, unless one wants to stay with the recommended values. Fields that can be found under the fields following the dashes shown in the view of Figure 6 may be disclosed by means of browsing means in order to make more finely graded settings. The most finely graded settings can be hidden and only open up in connection with rights according to the professional skill of the welder, for example. These settings, as well as any welding parameters known per se, applicable to the welding event, can be brought also to the welding event-specific adjustment vector to be stored/used. The term adjustment vector indicates an ordered set of those welding parameters and/or attributes, which describe the welding event to the welding device itself in order to implement its functionality in a welding event. Then, a particular welding event can be examined as a set of welding parameters, which can be regarded as including welding parameters known per se, when applicable, and then the parameters can have a certain hierarchy and the welding event can be classified/examined through the sets of welding parameters and attributes presented in the components of the adjustment vector.

**EXAMPLE 2**

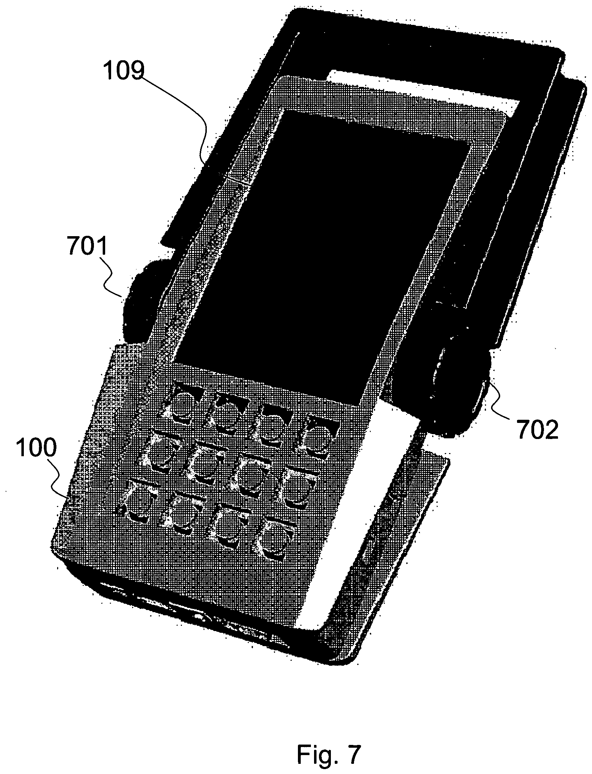

Figure 7 shows a module according to an embodiment of the invention. It includes a user interface provided with mechanical knobs 701, 702 as a kind of adjustment elements and set-value adjusters. Then, adjustment can be accomplished, in which, referring to the view in Figure 1, e.g. the left hand rotary knob adjusts the synergistic power, moving the adjustment element 113 in a horizontal direction between the locking elements 116, and the right hand rotary knob adjusts the voltage fine tuning, moving the electric arc length (VLPHS) of the figure 109B. According to an embodiment of the invention, the connection between said adjustment elements can be locked and/or released, so that, as the fine tuning of the voltage is changed, also the blackened ball will move along the adjustment element 113 in the vertical direction at the point on the x-axis according to its position illustrating the deviation in the voltage caused by the fine tuning compared to the synergistic adjustment value.

The adjustments according to the user interface will be kept in memory for the welding event, in which the welding device is controlled according to the set variable values. According to an embodiment of the invention, the adjustment knobs can also be provided with a degree of freedom to move in the direction of their rotation axis in order to achieve additional functions by axially pulling and/or pushing the adjustment knob into a new adjustment/operating range. There is no wish to limit the number of adjustment knobs or their positioning solely to those presented in the example, but their number and implementation can vary, e.g. in order to provide the functions illustrated by Figure 1, not, however, limiting the embodiments by the examples solely to the presented examples.

## EXAMPLE 3

Figure 8 shows a view of a portion 109 of the display of a module according to an embodiment of the invention. Viewing the figure from left to right, at first the module is being started, wherein the welder can log on to the welding system and/or the welder is identified according to his functionality/professional skills, based, for example, on RFID identifiers, and the welder is given the corresponding rights to welding events. Then, also the professional skill of the welder can be managed, and it can be directed to optimal tasks. The managing can be implemented by managing the welder's rights to use the welding device in question. The elements to be used for the managing can naturally be located in the software module part.

In the center of Figure 8, a view of a pre-selected welding program at a work place is being illustrated, where the last welding event, for example, remains in the memory. Then, it is easy for the user to continue from there, if necessary. However, the user decides to change the operating point (x;y) such, that (7,5 m/min; 22 V) is changed into the point (8,0; 29 V). This is equivalent to a change in the setting of the operating point on another synergy curve from (7,5 m/min; 260 A) to (8,0 m/min, 265 A). The reference number 410 indicates an embodiment of a welding method, in which a new welding event can be selected. The reference number 801 indicates, by means of the dotted line, a demarcated area of the screen, and simultaneously illustrates such an embodiment of the invention, the module according to which is provided with such a user interface that shows, on a touch screen, selection elements for selecting the type of joint and other welding parameters.

## EXAPLE 4

Using a module according to an embodiment of the invention, the welder controls a welding device in a welding event. By means of a user interface, the welder is enabled to set a multitude of welding parameters affecting the welding event and its classified position in the hierarchy of welding events and in their more detailed classification according to attributes. Due to the graphic attachment, the welder can view the effects of his selections through a demo, which can be presented in a portion of the display of the module. At the same time, other effects, concerning welding requiring precise management of the welding process, can be presented in another portion.

The graphic user interface also enables a completely novel · dimension in the user interface of a welding device: through the interface, administration of the information contained in the welding device can be handled in a better way, i.a. by giving the user user-specific welding rights, but also rights, based on the professional skill, to change certain settings and to determine who did the welding and of what. This is useful also, in case there later would arise a need to identify the performer of a job. Then, e.g. the embodiments associated with the RFID combined with embodiments using data networks and/or databases provide suitable means for that, and then, when applicable, means of the software module part can be used. In a module according to an embodiment of the invention, there are snap locking means for attaching/removing the module to/from the welding device.

According to an embodiment of the invention, almost any parameter, known per se, having an impact on a certain welding job, can, as an attribute, be introduced as a welding parameter in a welding event, and thus, into the scope of settings to be set by means of the graphical user interface. Then, the welding events can be distinguished from each other, and, ultimately, based on the attributes such, that one differing attribute in a first welding event, in a hierarchy of welding events according to an embodiment, will classify the event as a second welding event. In that case, there may be several MIG welding events, for example, and then their number can vary even work place-wise according to the welding device being controlled by means of the module. However, access to some settings must be excluded from the ordinary user, which can be done in some manner known per se of rights management, e.g. by means of the software module part. The means managing the rights can, when applicable, be subordinated to the software module part or a suitable remote controller part.

## EXAMPLE 5

A module according to an embodiment of the invention is being used in welding in connection with a welding device. The welder is an experienced professional being used to select the relation between the welding wire and the voltage in a slightly different way than what is indicated as a synergy curve in the experiment based model provided with the software module part of the module. Fairly frequently the welder performs a welding job according to a certain welding event over and over again. In that case, the welder wishes to store in a memory the values of the welding parameters (x;y) that he used in the operating points of his choice. Then, by means of the Monte Carlo means of the software module part, the welding event-specific synergy curve applicable to the work place of the welder can be iteratively fitted, its precision improved, even point for point, by means of the values of the operating points (x,y) used by the welder. Regardless of the name chosen for the fitting means, there is no wish in any way to limit the fitting algorithm itself solely to the Monte Carlo algorithm, but rather, other fitting algorithms can be used, when applicable.

Although fitting, by means of an algorithm, of the curve passing through the set of points (x;y) or some subset of the same, is known per se on the basis of any known fitting method, some embodiments of the invention can utilize fitting in a module according to an embodiment of the invention in order to approximate the relation between welding variables, with a precision known per se determined on the basis of a certain set of points, for creating a synergy curve according to the welding model in a welding event-specific and/or welder-specific manner. Then, according to an embodiment, the welder may choose whether he will use just operating points determined by himself, partly by himself and partly by a producer, or will there in the welding model be data given by the supplier of the welding device participating in creating the synergy curve. Data can be supplied to the user and/or his device in connection with the software module part or updates to the same.

Said welder has got an apprentice, who performs jobs with lesser requirements for precision. The welder has instructed the apprentice to use the ordinary set of synergy curves and to make changes to it only in the form of changes according to position, selections of material and/or type of joint. Then also, the module can be arranged to keep a tally of the values (x;y) of the variables. The module can also report to the welder the values of the operating points used by his apprentice, at least in some welding events. Then, the database of the software module part of the module can be arranged to calculate deviations from pre-stored reference values and other statistical data known per se, to be reported. The classification of the welding event can even be taken so far that the choice of position, material, and/or type of joint will be regarded as different welding events, and, in the report, the variables determined by the attributes of the welding events will be taken into account such, that, according to an embodiment of the module, by means of the software module part, one can select what attribute values and/or what welding event one wishes to monitor, either generally or in a user-specific way. According to an embodiment of the invention, the classification of the welding event occurs on the basis of attributes, and then also other variables, characteristic per se to the welding event, can be included, if necessary pin-pointed according to the range of values regarding a certain welding event and the values according to that. In addition to the report, out of the calculated deviations guidance regarding substitute actions is formulated. Measured variables are, not being limited per se to the listed ones, typically the current, the voltage, the power, the pulse rate, the duration of shorts, the short rate, and the motor current. Primary substitute actions are deduced from the deviations of the measured variables and the reference variables, and they are communicated to the welder. For example, notification will be made about too long / too short free wire length. In determining the substitute actions, type information characteristic to the welder can be used as an aid, which information is obtained from, e.g., welding practice runs performed by the welder and/or from his earlier work accomplishments.

## EXAMPLE 6

In a module according to an embodiment of the invention, Monte Carlo means are arranged in the software module part of the module for storing in a database the values of the welding parameters according to the (x,y) pairs. Then, according to an embodiment of the invention, the module also includes fitting means for creating a fit through the set of points formed by certain (x,y) variables. The fit, as such, can be determined using some known fitting method. According to an embodiment of the invention, the fit used by the software module part of the module is a fitting polynomial of the order i-1 comprising at least a part, which can be put into the form

$$(1) \quad y = \sum_{i=1}^{n} (a_i + x)^{i-1}$$

or

$$(2) \quad y = \sum_{i=1}^{n} (a_i - x)^{i-1}$$

in order to approximate the interdependence between the x- and y-variables, on the basis of the part of said set of points. According to a set of embodiments, the polynomial is a 1st, 2nd, or 3rd degree polynomial, not being limited solely to the said ones. Here, degree indicates the highest power of x. A person skilled in the art also knows, e.g., the least squares method, as such, to be applied, when applicable, for an approximation per se of a fit to be created for the sets of points (x,y). According to an embodiment, the fit can be formed by means of analytical basic functions or combinations of those, thus, however not excluding numerical fitting.

According to an embodiment of the invention, a separate welding module can be substituted by a computer, as long as there is a software module part according to an embodiment of the invention installed in it, and the necessary attachments at the device interfaces for controlling the welding device and/or controlling the functionalities of the applicable parts according to the hardware module part.

According to an embodiment of the invention, one attribute affecting the adjustment of the welding power or some variable derived thereof is the position of the welded seam in relation to the field of gravity. Then, according to an embodiment of the invention, the power or some variable derived from it can be adjusted in accordance with whether the position of the welded seam is parallel to direction of the field of gravity, perpendicular to it, or whether the welded seam forms a plane at a certain angle to the direction of the field of gravity. Then, one can influence the adjustment of the power of welding or a variable derived from it by means of said attribute and, thus, take into account the structure, the material and/or the thickness of the material of the object, when performing the welding.

**EXAMPLE 7**

According to an embodiment of the invention, the software module part of the module comprises sampling means for measuring and/or storing the values of at least some (x,y) variables in a welding event-specific manner in a database. In this case, the logging of the data including the values of the variables in the course of the welding event can be made, as such, with known program means. According to an embodiment of the invention, said sampling means for the (x,y) pairs is arranged to cooperate with the Monte Carlo means mentioned in a previous example. Then, according to an embodiment, the sampling means can also be separate from said Monte Carlo means, but they may use, when applicable, the same program routines in connection with the database functions.

According to an embodiment of the invention, the sampling means are arranged to store in a memory the measured values of all the available welding variables and/or attributes associated with a welding event, the values having been obtained based on a sensor responsible for the measured values and/or a calculated derived variable, although all of the welding variables would not be selected as such variables concerning the welding event from which one desires to form (x,y) pairs.

According to an embodiment, there are more than two variables, but less than the total number of available ones, per se, out of which variables variable values to be stored are formed. According to an embodiment of the invention, the desired welding variables and/or the number of them can be set by the user through the user interface. According to an embodiment of the invention, the sampling of the desired and/or pre-selected variables can be done, according to the settings, on an evenly graded time scale, but, according to an embodiment, on a logarithmic time scale. According to an embodiment of the invention, the sampling means are provided with a change detector arranged to monitor changes in the values of welding variables, whereby variables, that essentially remain constant, require being stored at just certain intervals according to the settings, unless changes occur. When the change detector is operational and detects an essential change within the scope of the time scale, the device will narrow the sampling interval of the variable to be sampled. In this case, an adaptive matrix, known per se, can be used in the sampling, whereby the sampling of the welding variables, at certain intervals, can be made more or less frequent, according to the change detector, regardless of whether the times or points in time are on a linear scale or a logarithmic scale.

According to an embodiment of the invention, the module is arranged to give feedback, based on the values of the welding variables, to the welder or other user about whether the welding event conforms to a certain set of criteria within desired tolerances and/or operates according to other pre-stored reference values. The tolerances can be defined in a welding event-specific manner based on the values of certain variables exceeding or falling below the tolerance limits, and then, by means of the tolerances, a quality classification based on hierarchical tolerances can be made as well.

According to an embodiment of the invention, the feedback provided by the means of the software module part may comprise on-line indicator light control during the welding, sound aided signaling to be presented for changing the value of a welding variable during a welding event, and/or a report about changes, as such, in welding variables to be presented as a graph and/or in relation to a mean value / the tolerances on the basis of data previously gathered from the welding event. The illustration by means of a graph can also be of the on-line type, according to an embodiment. According to an embodiment of the invention, the software module part can be implemented, totally or to a suitable extent, by means of a computer connected to the welding device for data gathering concerning (x,y) welding variables, parameters and/or other data. Reporting can be done either as a printout and/or digitally in a data file, but also, if necessary, by means of a connected display of the module, even over a data network, or in some other manner, also known per se. The report can also be in text form, when applicable, but it may contain graphics as well to be presented for illustration purposes.

It is evident to a person skilled in the art, that along with the technical development, the basic idea of the invention can be implemented in many different ways. Thus, the invention and its embodiments are not limited to the examples described above, but rather, they can vary within the scope of the appended patent claims.

**Claims**

1. A module (100) for controlling a welding device, wherein, in order to control the operating point of the welding device (104, 104B, 104C, 104D, 104E) graphically by means of a set of graphs comprising at least a graphic curve (111), formed by means of the relation between an x-variable and a y-variable, to be presented on a display as a synergistic characteristic curve characterizing a selected welding event, the module (100), for setting the operating point, is provided with at least one set-value adjuster (113) for presenting the operating point and its deviation ($\_\Delta 1$, $\Delta 2$) from said synergistic characteristic curve in connection with said set of graphs, wherein the module is provided with presentation means arranged to guide (502, 503, 504) the welder with AV guidance according to the welding event, at a presentation speed selected by the welder.

2. The module (100) according to Claim 1, **characterized in, that** the module (100) contains

- a hardware module part (200),
wherein said hardware module part (200) is comprising at least one of the following: a display (109), a touch pad, a touch screen (109), a display adapter (204), means (117,118,121, 701,702) for setting the settings to the welding device of the values of the operating point according to the set-value adjuster, a control knob (701, 702), a switch, a set of keys (117,118,121), a set of virtual keys, sensor means for determining points of the characteristic curve (x,y) between the x-variable and the y-variable, and/or
- a software module part (210),
wherein said software module part (210) is comprising at least one of the following: means for display control (214), means for reading a touch pad, means for controlling (214) and reading (211) a touch screen, means (211) for reading the values of the operating point according to the set-value adjuster and for converting them to a signal to be used to set the settings (213) to the welding device (104), means (217) for reading the information of sensor means and means for determining the characteristic curve between the x-variable and the y-variable, database means (212) for storing/reading the characteristic curve, the setting and/or the deviation of the operating point, according to the welding event, Monte Carlo means for storing the welding event-specific variable values of the welding variables and for analyzing their interdependency, means for reading the adjustment of a control knob (701, 702), means (117, 118, 121) for reading the states of a switch, a set of keys and/or a set of virtual keys.

3. The module (100) according to Claim 1, **characterized in, that** the x-variable is one of the following: the wire feed rate, the welding current, the welding voltage, the feed rate of another welding material, the partial pressure of the shielding gas of the welding event, the air humidity, the humidity of the surface of the object to be welded, some variable derived from one of the ones mentioned above, or a combination of the ones mentioned above.

4. The module (100) according to Claim 1, **characterized in, that** said y-variable for said welding event is one of the following: the voltage or a variable derived from it, the welding current, the welding voltage, the welding power, the feed rate of a welding material, the partial pressure of the shielding gas of the welding event, the air humidity, the humidity of the surface of the object to be welded, some variable derived from one of the ones mentioned above, or a combination of the ones mentioned above.

5. The module (100) according to any one of the preceding claims, **characterized in, that** it (100) is provided with Monte Carlo means arranged in connection with database means for storing in a memory the welding event-specific (x;y) points of a certain work place of a welder.

6. The module (100) according to Claim 5, **characterized in, that** said Monte Carlo means of the module (100) are arranged to construct and/or define more precisely a fit according to a welding model, by means of a set of (x;y) points for creating a synergy curve.

7. The module (100) according to Claim 5, **characterized in, that** said Monte Carlo means of the module (100) are arranged to be used for forming at least one deviation between the values of variables measured during the welding job and pre-stored reference values.

8. A welding device (104, 104B, 104C, 104D, 104E), **characterized in, that** it (104, 104B, 104C, 104D, 104E) contains a module (100) according to one of the preceding claims.

9. A method of guiding a welder, by means of a module (100), for performing a selected (401) welding event (HT, 408), in which method

- a synergistic characteristic curve based on a set of welding variables and/or the operating point of said welding event are fed back onto a display (109) controlled by the module (100), wherein, as attributes in said set of welding variables, there is at least one of the following: the feed of welding material, the welding current, the welding voltage, the welding power, the pulse form, the shielding gas, the wire material, the wire dimension, the plate thickness, the form of the joint, and the welding position, the method being **characterized in, that** the method comprises steps, in which
- guidance is given by a module (100), being provided with presentation means arranged to guide the welder with AV guidance according to the welding event (HT, 408), at a presentation speed selected by the welder, guides the welder,
- a characteristic curve and/or an operating point for use in the welding process, based on a set of attributes, are being recommended,
- values of the welding variables according to the attributes of the welding event (HT, 408) are fetched (402) from a database, for setting the operating point according to the welding event and for using the welding device (104, 104B, 104C, 104D, 104E) in a predefined manner,
- the user is guided (403, 502,503,504) graphically of the effects of the parameters,
- the user accepts (ok) the values of the welding variables and/or the other attributes in the operating point, or, alternatively, adjusts the value of a welding variable and/or an attribute in order to reach the desired operating point before starting (404) the welding,
- the welding is started to be performed in accordance with the accepted parameters.

10. The method, according to claim 9 **characterized in, that** it further comprises:

- a preparatory step for defining (401, 402) the welding parameters,

and the steps where

- the welding power is adjusted during the welding event, and
- the welding event is performed to completion in accordance with the operating point according to the values of the welding variables accepted (405, 407) by the user, the guidance (502-503-504), and/or the other attributes.

11. The method according to Claim 10, **characterized in, that**, during the step of graphical guidance, the deviations between the values measured during the performance of the welding job and the pre-stored reference values are being presented.

12. The method according to Claim 10, in which the measured values are the current, the voltage, the power, the frequency of shorts, the number of shorts per unit of time and/or the duration of the shorts.

13. The welding method according to Claim 11, **characterized in, that** it contains a step of graphical guidance (403, 503) for presenting to the welder actions following the welding event.

14. The method according to one of the Claims 10 to 13, **characterized in, that** it contains a step of graphical guidance (403, 503) for presenting the welding event to the welder before the welding, after (409) the welding and/or during the welding event.

15. **A program product** arranged on a medium of machine readable form, to be executed in a microprocessor for setting and/or using the elements of a software module part in order to provide the functionality of a welding module (100) according to any one of the Claims 1 to 7, in order to control a welding machine (104, 104A, 104B, 104C, 104D, 104E).

16. A welding system, **comprising** such a set of welding devices, which contains at least one such a welding device, which contains a module (100) according to one of the Claims 1 to 7 for graphic control of the operating point of at least one of said set of welding devices.

**Patentansprüche**

1. Modul (100) zum Steuern einer Schweißvorrichtung, wobei, für die Steuerung des Betriebspunkts der Schweißvorrichtung (104, 104B, 104C, 104D, 104E) mittels eines über die Beziehung zwischen einer x-Variablen und einer y-Variablen gebildeten Kurvensatzes, der mindestens eine grafische Kurve (111) aufweist, die als synergetische Kennlinie, die ein ausgewähltes Schweißereignis kennzeichnet, auf einer Anzeige darzustellen ist, das Modul (100) zur Einstellung des Betriebspunkts mit mindestens einem Sollwertgeber (113) versehen ist, um den Betriebspunkt und dessen Abweichung (_$\Delta$1, $\Delta$2) von der synergetischen Kennlinie in Verbindung mit dem Kurvensatz darzustellen, wobei das Modul mit Darstellungsmitteln versehen ist, die so angeordnet sind, dass sie den Schweißer mit AV-Führung entsprechend dem Schweißereignis bei einer vom Schweißer ausgewählten Darstellungsgeschwindigkeit führen (502, 503, 504).

2. Modul (100) nach Anspruch 1, **dadurch gekennzeichnet, dass** das Modul (100) enthält:

- ein Hardware-Modulteil (200),
wobei das Hardware-Modulteil (200) mindestens eines von Folgendem umfasst: eine Anzeige (109), ein Tastfeld, einen Tastbildschirm (109), einen Anzeige-Adapter (204), Mittel (117, 118, 121, 701, 702) zum Festlegen der Einstellungen der Werte des Betriebspunkts entsprechend dem Sollwertgeber für die Schweißvorrichtung, einen Bedienknopf (701, 702), einen Schalter, einen Satz von Tasten (117, 118, 121), einen Satz von virtuellen Tasten, Sensormittel zum Bestimmen von Punkten der Kennlinie (x,y) zwischen der x-Variablen und der y-Variablen, und/oder
- ein Software-Modulteil (210),
wobei das Software-Modulteil (210) mindestens eines von Folgendem umfasst: Mittel zur Anzeigebedienung (214), Mittel zum Lesen eines Tastfelds, Mittel zum Bedienen (214) und Lesen (211) eines Tastbildschirms, Mittel (211) zum Lesen der Werte des Betriebspunkts entsprechend dem Sollwertgeber und zu deren Umwandlung zu einem Signal zur Verwendung für das Festlegen der Einstellungen (213) für die Schweißvorrichtung (104), Mittel (217) zum Lesen der Informationen des Sensormittels und Mittel zur Bestimmung der Kennlinie zwischen der x-Variablen und der y-Variablen, Datenbankmittel (212) zum Speichern/Lesen der Kennlinie, der Einstellung und/oder der Abweichung des Betriebspunkts entsprechend dem Schweißereignis, Monte-Carlo-Mittel zum Speichern der schweißereignisspezifischen variablen Werte der Schweißvariablen und zum Analysieren ihrer gegenseitigen Abhängigkeit, Mittel zum Lesen der Verstellung eines Bedienknopfs (701, 702), Mittel (117, 118, 121) zum Lesen der Zustände eines Schalters, eines Satzes von Tasten und/oder eines Satzes von virtuellen Tasten.

3.  Modul (100) nach Anspruch 1, **dadurch gekennzeichnet, dass** die x-Variable eines von Folgendem ist: die Drahtvorschubrate, der Schweißstrom, die Schweißspannung, die Vorschubrate eines anderen Schweißmaterials, der Teildruck des Schutzgases des Schweißereignisses, die Luftfeuchtigkeit, die Feuchtigkeit der Oberfläche des zu schweißenden Objekts, eine aus einer der oben genannten Variablen abgeleitete Variable oder eine Kombination der oben genannten Variablen.

4.  Modul (100) nach Anspruch 1, **dadurch gekennzeichnet, dass** die y-Variable für das Schweißereignis eines von Folgendem ist: die Spannung oder eine aus ihr abgeleitete Variable, der Schweißstrom, die Schweißspannung, die Schweißleistung, die Vorschubrate eines Schweißmaterials, der Teildruck des Schutzgases des Schweißereignisses, die Luftfeuchtigkeit, die Feuchtigkeit der Oberfläche des zu schweißenden Objekts, eine aus einer der oben genannten Variablen abgeleitete Variable oder eine Kombination der oben genannten Variablen.

5.  Modul (100) nach einem der vorhergehenden Ansprüche, **dadurch gekennzeichnet, dass** es (100) mit Monte-Carlo-Mitteln versehen ist, die im Zusammenhang mit Datenbankmitteln eingerichtet sind, um die schweißereignisspezifischen (x;y) Punkte eines bestimmten Arbeitsplatzes eines Schweißers in einem Speicher abzulegen.

6.  Modul (100) nach Anspruch 5, **dadurch gekennzeichnet, dass** die Monte-Carlo-Mittel des Moduls (100) eingerichtet sind, um einen Fit entsprechend einem Schweißmodell mittels eines Satzes von (x;y) Punkten zur Erstellung einer Synergiekurve aufzubauen und/oder genauer zu definieren.

7.  Modul (100) nach Anspruch 5, **dadurch gekennzeichnet, dass** die Monte-Carlo-Mittel des Moduls (100) eingerichtet sind, um für die Ausbildung mindestens einer Abweichung zwischen den während des Schweißauftrags gemessenen Werten von Variablen und vorab gespeicherten Referenzwerten verwendet zu werden.

8.  Schweißvorrichtung (104, 104B, 104C, 104D, 104E), **dadurch gekennzeichnet, dass** sie (104, 104B, 104C, 104D, 104E) ein Modul (100) nach einem der vorhergehenden Ansprüche enthält.

9.  Verfahren zum Führen eines Schweißers mittels eines Moduls (100) zur Durchführung eines ausgewählten (401) Schweißereignisses (HT, 408), wobei in diesem Verfahren

    - eine synergetische Kennlinie auf Grundlage eines Satzes von Schweißvariablen und/oder der Betriebspunkt des Schweißereignisses auf eine vom Modul (109) angesteuerte Anzeige (109) rückgekoppelt wird, wobei als Attribute im Satz von Schweißvariablen mindestens eines von Folgendem vorliegt: der Vorschub von Schweißmaterial, der Schweißstrom, die Schweißspannung, die Schweißleistung, die Pulsform, das Schutzgas, das Drahtmaterial, die Drahtabmessung, die Plattendicke, die Form der Verbindung und die Schweißposition,

    wobei das Verfahren **dadurch gekennzeichnet ist, dass** das Verfahren Schritte aufweist, in welchen

    - eine Führung durch das Modul (100) bereitgestellt wird, das mit Darstellungsmitteln versehen ist, um den Schweißer mit AV-Führung entsprechend dem Schweißereignis (HT, 408) bei einer vom Schweißer ausgewählten Darstellungsgeschwindigkeit zu führen,
    - eine Kennlinie und/oder ein Betriebspunkt zur Verwendung im Schweißprozess auf Grundlage eines Satzes von Attributen empfohlen werden,
    - Werte der Schweißvariablen entsprechend den Attributen des Schweißereignisses (HT, 408) aus einer Datenbank abgerufen (402) werden, um den Betriebspunkt entsprechend dem Schweißereignis einzustellen und die Schweißvorrichtung (104, 104B, 104C, 104D, 104E) in einer vorherbestimmten Weise zu verwenden,
    - der Benutzer in Bezug auf die Effekte der Parameter grafisch geführt (403, 502, 503, 504) wird,
    - der Benutzer die Werte der Schweißvariablen und/oder die anderen Attribute im Betriebspunkt bestätigt (ok) oder alternativ den Wert einer Schweißvariablen und/oder ein Attribut verstellt, um den gewünschten Betriebspunkt zu erreichen, bevor er den Schweißvorgang (404) startet,

- die Ausführung des Schweißen entsprechend den bestätigten Parametern gestartet wird.

10. Verfahren nach Anspruch 9, **dadurch gekennzeichnet, dass** es ferner umfasst:

- einen Vorbereitungsschritt zur Festlegung (401, 402) der Schweißparameter,

und die Schritte, bei denen

- die Schweißleistung während des Schweißereignisses verstellt wird und
- das Schweißereignis entsprechend den Werten der vom Benutzer bestätigten (405, 407) Schweißvariablen, der Führung (502-503-504) und/oder den anderen Attributen entsprechend dem Betriebspunkt bis zur Fertigstellung ausgeführt wird.

11. Verfahren nach Anspruch 10, **dadurch gekennzeichnet, dass** während des Schritts der graphischen Führung die Abweichungen zwischen den während der Durchführung des Schweißauftrags gemessenen Werten und den vorab gespeicherten Referenzwerten dargestellt werden.

12. Verfahren nach Anspruch 10, in welchem es sich bei den gemessenen Werten um den Strom, die Spannung, die Leistung, die Häufigkeit von Kurzschlüssen, die Anzahl von Kurzschlüssen pro Zeiteinheit und/oder die Dauer der Kurzschlüsse handelt.

13. Schweißverfahren nach Anspruch 11, **dadurch gekennzeichnet, dass** es einen Schritt der grafischen Führung (403, 503) enthält, um dem Schweißer Handlungen entsprechend dem Schweißereignis darzustellen.

14. Verfahren nach einem der Ansprüche 10 bis 13, **dadurch gekennzeichnet, dass** es einen Schritt der grafischen Führung (403, 503) enthält, um dem Schweißer das Schweißereignis vor dem Schweißen, nach (409) dem Schweißen und/oder während des Schweißereignisses darzustellen.

15. Programmprodukt, angeordnet auf einem Medium von maschinenlesbarer Form, auszuführen in einem Mikroprozessor für das Einstellen und/oder Verwenden der Elemente eines Software-Modulteils, um die Funktionalität eines Schweißmoduls (100) nach einem der Ansprüche 1 bis 7 bereitzustellen, um eine Schweißmaschine (104, 104A, 104B, 104C, 104D, 104E) anzusteuern.

16. Schweißsystem, das einen Satz von Schweißvorrichtungen umfasst, der mindestens eine Schweißvorrichtung enthält, die ein Modul (100) nach einem der Ansprüche 1 bis 7 zur grafischen Steuerung des Betriebspunkts von mindestens einer aus dem Satz von Schweißvorrichtungen enthält.

## Revendications

1. Module (100) de commande d'un dispositif de soudage, dans lequel, pour contrôler le point de fonctionnement du dispositif de soudage (104, 104B, 104C, 104D, 104E) graphiquement au moyen d'un ensemble de graphes comprenant au moins une courbe graphique (111), formée au moyen d'une relation entre une variable x et une variable y, à présenter sur un écran d'affichage en tant que courbe caractéristique synergique caractérisant un événement de soudage choisi, le module (100), afin de régler le point de fonctionnement, est pourvu d'au moins un ajusteur de consigne (113) pour présenter le point de fonctionnement et son écart (_Δ1, Δ2) par rapport à ladite courbe caractéristique synergique en liaison avec ledit ensemble de graphes, ledit module étant pourvu de moyens de présentation disposés de manière à guider (502, 503, 504) le soudeur par guidage AV selon l'événement de soudage à une vitesse de présentation sélectionnée par le soudeur.

2. Module (100) selon la revendication 1, **caractérisé en ce que** le module (100) contient :

- une partie de module matériel (200),
ladite partie de module matériel (200) comprenant au moins un des éléments suivants : un écran d'affichage (109), un pavé tactile, un écran tactile (109), un adaptateur d'affichage (204), des moyens (117, 118, 121, 701, 702) pour ajuster les réglages des valeurs du point de fonctionnement au dispositif de soudage selon l'ajusteur de consigne, un bouton de commande (701, 702), un interrupteur, un ensemble de touches (117, 118, 121), un ensemble de touches virtuelles, des moyens capteurs pour déterminer des points de la courbe caractéristique (x,y) entre la variable x et la variable y, et/ou
- une partie module logiciel (210),
ladite partie module logiciel (210) comprenant au moins un des éléments suivants : des moyens de commande d'écran (214), des moyens pour lire un pavé tactile, des moyens pour commander (214) et lire (211) un écran tactile, des moyens (211) pour lire les valeurs du point de fonctionnement selon l'ajusteur de consigne et pour les convertir en un signal à utiliser pour ajuster les réglages (213) au dispositif de soudage (104), des moyens (217) pour lire les informations des moyens capteurs et des moyens pour déterminer la courbe caractéristique entre la variable x et la variable y, des moyens de base de données (212) pour stocker/lire la courbe caractéristique, le réglage et/ou l'écart du point de fonctionnement, selon l'événement de soudage, des moyens Monte Carlo pour stocker les valeurs variables spécifiques à l'événement de soudage et pour analyser leur interdépendance, des moyens pour lire le réglage d'un bouton de commande (701, 702), des moyens (117, 118, 121) pour lire les états d'un interrupteur, d'un ensemble de touches et/ou d'un ensemble de touches virtuelles.

3. Module (100) selon la revendication 1, **caractérisé en ce que** la variable x est l'un de ce qui suit : la vitesse d'avancement du fil, le courant de soudage, la tension de soudage, la vitesse d'avancement d'un autre matériau de soudage, la pression partielle du gaz protecteur de l'événement de soudage, l'humidité de l'air, l'humidité de la surface de l'objet à souder, une variable dérivée de l'une de celles susmentionnées ou une combinaison de celles susmentionnées.

4. Module (100) selon la revendication 1, **caractérisé en ce que** ladite variable y pour ledit événement de soudage est l'un de ce qui suit : la tension ou une variable dérivée de celle-ci, le courant de soudage, la tension de soudage, la puissance de soudage, la vitesse d'avancement d'un matériau de soudage, la pression partielle du gaz protecteur de l'événement de soudage, l'humidité de l'air, l'humidité de la surface de l'objet à souder, une variable dérivée de l'une de celles susmentionnées ou une combinaison de celles susmentionnées.

5. Module (100) selon l'une des revendications précédentes, **caractérisé en ce que** celui-ci (100) est pourvu de moyens Monte-Carlo disposés en liaison avec des moyens de base de données pour stocker, dans un mémoire, les points (x;y) spécifiques à l'événement de soudage d'un certain poste de travail d'un soudeur.

6. Module (100) selon la revendication 5, **caractérisé en ce que** lesdits moyens Monte Carlo du module (100) sont disposés de manière à construire et/ou définir plus précisément un fit selon un modèle de soudage, au moyen d'un ensemble de points (x;y) pour créer une courbe synergique.

7. Module (100) selon la revendication 5, **caractérisé**

**en ce que** lesdits moyens Monte Carlo du module (100) sont disposés de manière à être utilisés pour former au moins un écart entre les valeurs de variables mesurées pendant la tâche de soudage et des valeurs de référence préenregistrées.

8. Dispositif de soudage (104, 104B, 104C, 104D, 104E), **caractérisé en ce que** celui-ci (104, 104B, 104C, 104D, 104E) comprend un module (100) selon l'une des revendications précédentes.

9. Procédé de guidage d'un soudeur au moyen d'un module (100), pour exécuter un événement de soudage (HT, 408) choisi, dans lequel procédé

- une courbe caractéristique synergique fondée sur un ensemble de variables de soudage et/ou le point de fonctionnement dudit événement de soudage sont réinjectés à un écran d'affichage (109) commandée par le module (100), et, à titre d'attributs dans l'ensemble de variables de soudage, il y a au moins un de ce qui suit : l'avancement de matériau de soudage, le courant de soudage, la tension de soudage, la puissance de soudage, la forme d'impulsion, le gaz protecteur, le matériau du fil, la dimension du fil, l'épaisseur de la tôle, la forme de la soudure et la position de soudage,

ledit procédé étant **caractérisé en ce que** le procédé comprend des étapes dans lesquelles

- un guidage est réalisé par un module (100) pourvu de moyens de présentation disposés de manière à guider le soudeur par guidage AV selon l'événement de soudage (HT, 408) à une vitesse de présentation sélectionnée par le soudeur,
- une courbe caractéristique et/ou un point de fonctionnement pour l'utilisation dans le processus de soudage sur la base d'un ensemble d'attributs sont recommandés,
- des valeurs des variables de soudage selon les attributs de l'événement de soudage (HT, 408) sont extraites (402) d'une base de données pour régler le point de fonctionnement selon l'événement de soudage et pour utiliser le dispositif de soudage (104, 104B, 104C, 104D, 104E) d'une manière prédéterminée,
- l'utilisateur est guidé (403, 502, 503, 504) graphiquement sur les effets des paramètres,
- l'utilisateur accepte (ok) les valeurs des variables de soudage et/ou les autres attributs dans le point de fonctionnement ou, alternativement, varie la valeur d'une variable de soudage et/ou un attribut pour atteindre le point de fonctionnement désiré avant de commencer (404) le soudage,

- le soudage commence à être exécuté conformément aux paramètres acceptés.

10. Procédé selon la revendication 9, **caractérisé en ce que** celui-ci comprend également :

- une étape préparatoire pour définir (401, 402) les paramètres de soudage et les étapes dans lesquelles
- la puissance de soudage est variée pendant l'événement de soudage et
- l'événement de soudage est exécuté jusqu'à achèvement conformément au point de fonctionnement selon les valeurs des variables de soudage acceptées (405, 407) par l'utilisateur, le guidage (502-503-504) et/ou les autres attributs.

11. Procédé selon la revendication 10, **caractérisé en ce que**, pendant l'étape de guidage graphique, les écarts entre les valeurs mesurées pendant la réalisation de la tâche de soudage et les valeurs de références préenregistrées sont présentés.

12. Procédé selon la revendication 10, dans lequel les valeurs mesurées sont le courant, la tension, la puissance, la fréquence de courts-circuits, le nombre de courts-circuits par unité de temps et/ou la durée des courts-circuits.

13. Procédé de soudage selon la revendication 11, **caractérisé en ce que** celui-ci comprend une étape de guidage graphique (403, 503) pour présenter au soudeur des actions suivant l'événement de soudage.

14. Procédé selon l'une des revendications 10 à 13, **caractérisé en ce que** celui-ci comprend une étape de guidage graphique (403, 503) pour présenter au soudeur l'événement de soudage avant le soudage, après (409) le soudage et/ou pendant l'événement de soudage.

15. Produit programme disposé sur un support de forme lisible par machine, à exécuter dans un microprocesseur pour régler et/ou utiliser les éléments d'une partie de module logiciel afin de fournir la fonctionnalité d'un module de soudage (100) selon l'une des revendications 1 à 7, pour commander un appareil de soudage (104, 104A, 104B, 104C, 104E).

16. Système de soudage comprenant un tel ensemble de dispositifs de soudage, qui contient au moins un tel dispositif de soudage, qui contient un module (100) selon une des revendications 1 à 7 pour la commande graphique du point de fonctionnement d'au moins un parmi les dispositifs de soudage dudit ensemble.

Fig 1

Fig. 2

NET

Fig. 3

EP 2 440 361 B1

Pre-selection of a Welding Event — 401

Parameters — 402

Sensor/ Memory — 410

Demo / Animation ? — 403

Setting / Adjustment / Fine Tuning — 404

Store the Settings / Report? — 405

Safety ? — 406

no

Ready ? — 407

ok

no

Welding Event — 408

ok

Follow-up Activities / Report — 409

New Welding Event? — 410

Fig. 4

504

503

Welder Assistance

502

Graphs of Fine Tuning

501

Guidance of the Welding Event

500

Guidance of Selection of Materials

Y

X

Fig. 5

601 Settings for
Materials and Method

-method
-material of additive
-wire dimension of additive
-shielding gas

602 Description of the
Joint (guiding power
adjustment)

-type of joint
-position
-direction (if the position is vertical)
-plate thickness
-number of welding runs, sequence number
of run
-guiding display of the speed of transport

603 Adjustment of the
Welding Power (coarse
adjustment)

-welding power
-arc length
-welding automation ON/OFF
-2T / 4T – selection of the
trigger control
-remote control ON/OFF

604 Welding
(experiment)

605 Fine Tuning of the
Welding Automation

-adjusting the starting
-adjusting the coarseness
-adjusting the stopping
-pulse parameters

606 Storing

Fig. 6

109

701

702

100

Fig. 7

Logging on

Welder

Welding Engineer

Administrator

Menu

Ok

Last Welding
Event

801

109

(410) New
Welding Event

701

702

Fig 8

**REFERENCES CITED IN THE DESCRIPTION**

**Patent documents cited in the description**

- US 2009071949 A1
- US 6479793 B1

- WO 2007134373 A1